# EUROPÄISCHE PATENTSCHRIFT

(11) **EP 4 052 990 B1**
(45) Veröffentlichungstag und Bekanntmachung des Hinweises auf die Patenterteilung: **29.04.2026**
(21) Anmeldenummer: 21161902.8
(22) Anmeldetag: 10.03.2021
(51) Int. Cl.: B61L 15/00, B61L 27/00, G02B 27/01, G06F 11/00, B61L 27/20

(54) **SICHERES HEAD-UP DISPLAY IM FÜHRERSTAND EINES SCHIENENFAHRZEUGS UND VERFAHREN**
SAFE HEAD-UP DISPLAY IN THE DRIVER'S CAB OF A RAILWAY VEHICLE AND METHOD
AFFICHAGE TÊTE HAUTE FIABLE DANS LA CABINE DU CONDUCTEUR D'UN VÉHICULE FERROVIAIRE ET PROCÉDÉ

(30) Priorität: 04.03.2021 EP 21160592
(43) Veröffentlichungstag der Anmeldung: 07.09.2022
(73) Patentinhaber: Deuta-Werke GmbH, 51465 Bergisch Gladbach (DE)
(72) Erfinder: SIEGERT, Walter, 51647 Gummersbach (DE)
(74) Vertreter: Lippert Stachow Patentanwälte Rechtsanwälte

(56) Entgegenhaltungen:
- EP-A1- 2 833 349
- EP-A1- 3 121 638
- WO-A1-2011/003872
- US-B2- 8 988 251

## Beschreibung

### Technisches Gebiet, Einleitung und Hintergrund

Die vorliegende Erfindung betrifft allgemein das technische Gebiet der Anzeigeeinrichtungen im Führerstand (Engl.: driver cab) eines Schienenfahrzeugs, z.B. eines schienengebundenen TRIEBFAHRZEUGS, wie einer Lokomotive im Bahnverkehr oder einem Triebwagen einer U-Bahn oder Straßenbahn oder dergleichen.

Die Erfindung bezieht sich speziell auf Frontsicht-Anzeigen, nachfolgend mit dem englischen Begriff "Head-Up Display" bezeichnet (kurz: HUD, wörtlich: "Kopf-Oben-Anzeige").

Als Frontsicht-Anzeige bzw. HUD werden vorliegend durchsichtige Anzeigen bezeichnet, welche Information überlagernd in der Sicht des Fahrers auf die Außenwelt anzeigen, insbesondere im Sichtfeld durch die Windschutzscheibe des Führerstands. Hierbei werden vorliegend allgemeingültig alle Frontsicht-Anzeigen als HUD bezeichnet, ungeachtet der verwendeten Technologie, optischen Anordnung oder Projektionsrichtung, sei es von oben oder unten und auch ungeachtet der Relativlage zur durchschnittlichen Augenhöhe des Fahrers (d.h. auch bei gesenktem Blickwinkel z.B. unmittelbar vor das Fahrzeug: sog. "Kopf-unten-Anzeige"). Somit bezeichnet der Begriff HUD vorliegend insbesondere jede transparente Anzeige, die ganz oder vollständig im Blickfeld des Fahrzeugführers auf die Strecke bzw. durch die Frontscheibe angeordnet ist.

Allgemein liegt ein entscheidender Vorteil eines HUD darin, dass der Fahrer die vorausliegende Strecke und Umgebung besser beobachten kann, weil er dank des HUD seltener auf konventionelle Armaturen bzw. Anzeigen blicken muss. Die Sicherheit wird erhöht, da sich der Fahrer auf die Fahrstrecke konzentrieren und dabei zugleich kritische Informationen wahrnehmen kann, aber auch weil die Verringerung nötiger Blickfeldwechsel von Strecke zu konventionellen Instrumenten die Augenermüdung reduziert.

Es ist somit wünschenswert, dass der Triebfahrzeugführer bzw. Fahrer relevante Information bei der Streckenbeobachtung bzw. Umgebungsbeobachtung wahrnehmen kann, ohne den Blick auf andere Anzeigen im Führerstand abwenden zu müssen. Die Nutzung von HUDs in Schienenfahrzeugen wurde bereits Anfang der 1990er Jahre in Patentschriften vorgeschlagen, z.B. in JP-H05-38965A oder JP-H05-38966A. Bisher sind HUDs in Schienenfahrzeugen jedoch nicht verbreitet.

Spezifische Vorteile von HUDs im Führerstand von Schienen-Triebfahrzeugen bzw. für Triebfahrzeugführer wurden in einer Studie von Thomas u. Davies erläutert (THOMAS, Martyn; DAVIES, Kelvin. Feasibility of head-up displays in driving cabs. In 8th World Congress on Railway Research, Seoul Korea. 2008) und auch bereits in der Fachpresse dargelegt (RODEN, Andrew. "Heads up!". International Railway Journal, 2008, 48. Jg., Nr. 1). Ein HUD kann spürbar zur Sicherheit (Engl. safety) im Schienenverkehr beitragen, wie von Thomas u. Davies (a.a.O.) aufgezeigt.

Zur Erreichung dieses Ziels wird das Anzeigen von Information die für die Sicherheit (Engl. safety) kritisch ist, z.B. der Fahrgeschwindigkeit oder Bremsinformation, im HUD als notwendig erachtet. Eine solche Anzeige muss hierzu den anwendbaren Sicherheitsanforderungen genügen. Ein Grund für bisher ausbleibende Verbreitung von HUDs in der Schienenfahrzeugtechnik kann in vergleichsweise strengen und oft noch national unterschiedlichen Sicherheitsanforderungen liegen.

Standardisierungsbemühungen zum Führerstand, insbesondere wesentlicher Bedien- und Anzeigeelemente des DMI (Driver Machine Interface -auch TDU: train driver unit bzw. CDU: cab display unit o.ä. bezeichnet), einschließlich Anforderungen an funktionelle Sicherheit befinden sich z.T. weiterhin in Arbeit bzw. noch in der Umsetzung, wie z.B. in der EU im Rahmen des European Train Control System (ETCS) oder des U.S. Rail Safety Improvement Act (2008).

Ganz allgemein kommt der funktionellen Sicherheit der Anzeigegeräte, z.B. der Displays des DMI, mit zunehmender Verbreitung von automatischen Zugbeeinflussungssystemen bzw. automatischen Zugsicherungssystemen vom Typ Communication-Based Train Control (CBTC) eine steigende Bedeutung zu, insbesondere bei ATP-Systemen (Automatic Train Protection), d.h. Systemen zur automatischen Zugsicherung bzw. zur Zugbeeinflussung.

Eines der Ziele hierbei ist die Signalisierung nicht primär streckenseitig, sondern eine Signalisierung im Führerstand (Engl. In-Cab Signalling) realisieren zu können. ATP-Systeme können die Kapazität maximieren und zugleich streckenseitige Ausrüstung minimieren. In Metro- bzw. U-Bahn-Netzen ist CBTC mit ATP-Zugsicherung bereits im Einsatz.

Ein Problem vom bzw. ein Hindernis gegen den verstärkten Einsatz von Signalisierung im Führerstand sehen Thomas u. Davies (a.a.O.) bei konventionellen Anzeigesystem aber gerade darin, dass der Triebfahrzeugführer mehr und mehr Zeit damit verbringt, auf Anzeigen im Bedienpult hinunterzuschauen. Er hätte damit weniger Zeit für die Streckenüberwachung. Die Streckenüberwachung, insbesondere zur Minderung von Kollisionsrisiken, bleibt jedoch eine Hauptaufgabe des Fahrzeugführers.

Für zumindest einige der im DMI angezeigten Informationen die für den Betrieb kritisch und sicherheitsrelevant sind, wie z.B. die aktuelle Geschwindigkeit, Geschwindigkeitsbegrenzungen, der ATP-Modus usw., wäre eine Anzeige mittels HUD somit nicht nur grundsätzlich ergonomischer, sondern gerade in Verbindung mit ATP-Systemen besonders vorteilhaft und wünschenswert. Es besteht somit das Bestreben, im HUD sicherheitskritische Informationen zuverlässig korrekt anzeigen zu können (sichere Korrektheit).

HUD-Technik kann grundsätzlich im Vergleich zu konventionellen Anzeigen im DMI, bedingt u.a. durch die optisch komplexeren Systeme, die z.B. typisch auch ergonomiebedingt bzgl. des Blickfelds auf den Fahrer einstellbar sein sollen, als inhärent fehleranfälliger angesehen werden. Eine technische Herausforderung besteht besonders bei HUD-basierten Anzeigen darin, zu gewährleisten, dass die Information auch für den Triebfahrzeugführer wahrnehmbar angezeigt wird (visuelle Sichtbarkeit bzw. Ablesbarkeit)).

Weiterhin ist bedingt durch die typisch durchsichtige Darstellung im HUD, wenn eine bestimmte Information aktuell nicht angezeigt wird, für den Nutzer oft nicht unterscheidbar bzw. erkennbar, ob ein HUD ordnungsgemäß funktioniert oder ausgefallen ist. Somit erschwert ein HUD prinzipbedingt, im Vergleich zu konventionellen Displays, eine bei sicherheitskritischer Information in der Regel sicherheitstechnisch notwendige Fehleroffenbarung.

Für DMIs mit konventionellen Flachbildschirmen (Engl.: flat panel displays) sind Lösungen zum sicheren Anzeigen bereits in WO 2011/003872 A1 bzw. EP 2 353 089 B1 oder auch in EP 2 254 039 B1 vorgeschlagen worden. Diese Lösungen betreffen jedoch nicht HUD-Technik, sondern konventionelle Displays bzw. COTS-Displays. Hierbei wird das bildgebende Gerät an sich, z.B. ein TFT-Panel, als ausreichend fehlerfrei und auch visuell wahrnehmbar vorausgesetzt. Zumindest letztere Annahme gilt für HUDs jedoch, u.a. aus o.g. Gründen, nicht ohne Weiteres.

Vor dem obigen Hintergrund betrifft die Erfindung insbesondere ein System zum sicheren Anzeigen mit einem Führerstand-Frontsichtdisplay (HUD) eines Schienenfahrzeugs bzw. eine Anzeigeeinrichtung mit HUD hierfür, sowie ein entsprechendes Verfahren bzw. dessen Verwendung zur Anzeige sicherheitskritischer Information in einem Führerstand eines Schienenfahrzeugs.

### Stand der Technik

Es wurden inzwischen hierzu bereits Lösungsansätze vorgeschlagen. WO 2013/045478 A1 bzw. EP 2 734 888 B1 beschreibt einen Führerstand mit Frontsichtdisplay bzw. HUD zur Anzeige von schienenfahrzeugrelevanten Informationen im Sichtfeld des Lokführers. Zur Erhöhung der Sicherheit soll dabei eine gemeinsame bildgebende HUD-Einheit des HUD mit gleichartigen Informationen aus zwei verschiedenen Systemen beaufschlagt werden und Projektionen unterschiedlicher Farbe abgeben. Mittels zwei Spiegelsystemen werden beide Projektionen auf dieselbe Stelle der Projektionsfläche gerichtet. Sind die Informationen von beiden Systemen gleich, dann ergibt sich eine gut ablesbare kohärente Anzeige auf der Projektionsfläche mit einer Mischfarbe, sind dagegen die Informationen verschieden, ergibt sich eine erkennbar fehlerhafte Anzeige wegen nicht bestimmungsgemäßer Farbe und/oder Form. Eine solche rechentechnische und optische Zweikanaligkeit zur Fehleraufdeckung erhöht zwar die Sicherheit, ist jedoch technisch sehr aufwendig. Diese Lösung hat sich bisher nicht durchgesetzt, u.U. weil diese nur mit spezieller, sehr aufwendiger Bauweise des HUD zu verwirklichen wäre, die wegen ihrer Komplexität wiederum erhöhte Fehleranfälligkeit haben könnte. Es würde aber mit diesem System mit hoher Wahrscheinlichkeit eine Offenbarung möglicher Fehler in der Bilddatenverarbeitung erzielt.

WO 2017/012724 A1 bzw. EP 3 121 638 A1 offenbart ein System nach dem Oberbegriff aus Anspruch 1 und hierzu zwei unterschiedliche Lösungsansätze. In einem Ansatz sind zwei dabei redundante, darstellende Rechner vorgesehen, welche die gleichen Rohdaten vom Bordrechner verarbeiten und ggf. unterschiedlich programmiert sind, um identische Bilddaten zu denselben Rohdaten zu erzeugen. Diese Bilddaten werden parallel an die bildgebende HUD-Einheit des HUD über eine Umschalteinrichtung weitergeleitet. Die Umschalteinrichtung wirkt als Sicherheitsvorrichtung und schaltet, wie ein Multiplexer, auf den Eingang der bildgebenden HUD-Einheit periodisch und automatisch abwechselnd entweder den einen oder den anderen darstellenden Rechner, als abwechselnde Bilddatenquellen (soz. im Zeitmultiplex). Auf diese Weise wird Informationsabweichung zwischen beiden Rechnern offenbart, z.B. als periodische Störung der grafischen Anzeige. Auch hiermit kann eine Fehleroffenbarung erreicht werden.

Die beiden vorgenannten zweikanaligen Lösungsversuche aus WO 2013/045478 A1 und WO 2017/012724 A1 sind technisch aufwendig lassen aber das Problem der Sichtbarkeit (Engl. Visibilty) bzw. sicheren Ablesbarkeit an sich ungelöst.

Demgegenüber stellt ein zweiter Lösungsansatz aus WO 2017/012724 A1 bzw. EP 3 121 638 A1 eine Verbesserung dar. Hierbei umfasst das Sicherheitssystem eine Kamera, die für die Erfassung eines Bildes der auf dem HUD angezeigten Informationen konfiguriert und mit dem darstellenden HUD-Rechner verbunden ist, welcher das HUD ansteuert. Die Kamera ermöglicht eine Rückkopplung zur Überprüfung der am HUD angezeigten Informationen. Zur Fehlererkennung verarbeitet der darstellende HUD-Rechner grafische Daten aus dem erfassten Kamerabild, kehrt diese in interpretierte Daten um, und analysiert dann diese interpretierten Daten, um auf Übereinstimmung mit Rohinformationen vom Bordrechner zu prüfen. Bei Abweichung signalisiert der HUD-Rechner den Fehlerfall z.B. durch Ausgabe einer Warnung auf dem HUD und/oder eines akustischen Signals.

Mit der vorstehenden Lösung ist zwar inhärent sichergestellt, dass die Anzeige am HUD visuell wahrnehmbar ist. Allerdings ist diese Lösung u.a. rechentechnisch sehr aufwendig, weil im darstellenden Rechner zusätzliche Bildverarbeitung erforderlich ist. Unzutreffend angezeigte, nur vermeintliche Fehlerfälle (sog. "false-negative" Zustände), z.B. wegen Störung durch Objekte zwischen Kamera und HUD oder Blendung durch Umgebungslicht, sind nicht ausgeschlossen. Zudem wird die zur Sicherheit vorgesehene Rückkopplungsschleife unter Einsatz des darstellenden HUD-Rechners realisiert, dessen korrekte Funktion es eigentlich zu überwachen gilt und der als unzuverlässig zu betrachten ist - wie gerade der andere zweikanalige Ansatz in WO 2017/012724 A1 belegt. Die Rückkopplungsschleife ist somit von einer entscheidenden Fehlerquellen nicht unabhängig. Auch das Konzept mit Rückkopplung aus WO 2017/012724 A1 stellt somit im Sinne einer Sicherheitsbetrachtung keine überzeugende Lösung dar.

Ein ähnlicher Ansatz mit Bild-Rückkopplung anhand einer Kamera und aufwendiger Bildverarbeitung wurde in WO 2019/106489 A1 vorgeschlagen. Hier wird ebenfalls über eine Kamera das angezeigte Frontsichtbild rückgelesen. WO 2019/106489 A1 nennt als weiteres Ziel, zugleich die Strecke zu automatisiert zu überwachen, u.a. zwecks Positionsbestimmung des Fahrzeugs und/oder um eine Signalisierung im Führerstand (Engl. In-Cab Signalling) zu realisieren. Die Bildverarbeitung soll dabei im sicheren Fahrzeugrechner (z.B. EVC) erfolgen, welcher - im Sinne der Sicherheitstechnik - als sicher zu werten ist. Eine entsprechend aufwendige Auf- oder Umrüstung bzw. einhergehende Komplexitätssteigerung des sicheren Fahrzeugrechners (EVC) dürfte aber in der Praxis kaum oder nur bedingt Akzeptanz finden und erfordert eine hohe Systemintegration, wobei z.B. das DMI mit Kameraüberwachung nicht unabhängig vom EVC realisiert werden kann.

Die Vorschläge mit Kamera zur Bilderkennung aus WO 2017/012724 A1 und WO 2019/106489 A1 können zwar bei HUDs nebst der Sichtbarkeit im Ansatz eine sichere Korrektheit der Anzeige überwachen. Dies wird jedoch nur durch vergleichsweise aufwendige und selbst wiederum anfällige Mittel erreicht.

Vorliegend wird daher vom zweiten Ausführungsbeispiel in FIG.3 aus WO 2017/012724 A1 bzw. EP 3 121 638 A1 als nächstliegendem Stand der Technik ausgegangen.

Der Oberbegriff aus Anspruch 1 entspricht diesem System, welches ohne rechentechnisch aufwendige Bildverarbeitung bzw. - erkennung anhand einer Kamera auskommen kann.

### Aufgabenstellung

Ausgehend vom vorstehenden Stand der Technik besteht eine erste Aufgabe der vorliegenden Erfindung darin, eine Lösung vorzuschlagen, welche mit vergleichsweise geringerem Installationsaufwand realisierbar ist, insbesondere die Verwendung handelsüblicher HUD-Systeme erlaubt, und dabei dennoch eine sichere Anzeige mit einem Frontsicht-Display (HUD) im Führerstand ermöglicht.

Die Lösung soll insbesondere auch eine Prüfung der tatsächlichen Sichtbarkeit des Frontsichtbilds für den Fahrzeugführer erlauben.

Dies wird gemäß einem ersten Aspekt erreicht mit einem Anzeige-System bzw. einer Anzeigeeinrichtung nach Anspruch 1 bzw. mit einem Verfahren nach Anspruch 11. Die vorgeschlagene Lösung mit HUD-Anzeige soll dabei im Sinne der Sicherheitstechnik zertifizierbar sein. Sie soll insbesondere zumindest die Sicherheitsstufe SIL-2 erfüllen können. Bevorzugt soll die Lösung zudem die tatsächliche Anzeige (Engl. actual display), insbesondere auch die visuelle Sichtbarkeit (Engl. visibilty), von Information am HUD überprüfen und/oder sicherstellen können.

Eine weitere unabhängige Aufgabe bzw. ein unabhängiger zweiter Aspekt bestehen darin, eine verbesserte Sicherheitsfahrschaltung zur Wachsamkeitsprüfung im Führerstand vorzugschlagen. Dies wird erreicht durch ein System bzw. ein Verfahren nach dem unabhängigen Anspruch 6.

### Allgemeine Erfindungsbeschreibung

### Erster Aspekt

Ein gattungsgemäßes System bzw. eine Anzeigeeinrichtung zum sicheren Anzeigen mit einem Führerstand-Frontsichtdisplay (HUD) eines Schienenfahrzeugs, umfasst einerseits eine bildgebende HUD-Einheit in beliebiger geeigneter Technik zur Erzeugung eines Frontsichtbildes, wobei die HUD-Einheit auf einer durchsichtigen Anzeigefläche, z.B. dem sog. Combiner, ein Bild zwecks Anzeigen von Information innerhalb des Sichtfelds des Fahrers durch die Frontscheibe des Schienenfahrzeugs projiziert bzw. erzeugt.

Weiterhin umfasst das System einen darstellenden Rechner, insbesondere einen Rechner der im Sinne der Sicherheitstechnik als unsicher zu betrachten ist bzw. selbst nicht sicherheitszertifiziert ist. Der Rechner generiert Bilddaten für die HUD-Einheit, insbesondere einen Strom aus Bilddaten, vorzugsweise pixelformatierte Bilddaten, welche über eine Bilddatenleitung die HUD-Einheit ansteuern.

Die erzeugten Bilddaten stellen, je nach Betriebsmodus, mindestens eine, typisch mehrere sicherheitsrelevante Informationen dar, welche in einem jeweils zugeordneten sicherheitsrelevanten Bildbereich des Frontsichtbildes anzuzeigen ist bzw. sind und von einem jeweiligen Parameter abhängen. Der Parameter ist vorzugsweise ein fahrtrelevanter Parameter, welcher von einem Sicherheitsrechner (EVC) übermittelt wird, z.B. über einen geeigneten sicheren Datenkanal an den darstellenden Rechner. Die sicherheitsrelevante Information kann z.B. eine Fahrtinformation, insbesondere eine überwachte Geschwindigkeit, Bremsinformation oder Gefahreninformation sein, und/oder mindestens eine TCMS-Information (Train Control and Monitoring Systems: z.B. Türen auf/zu; oder Stromabnehmer aus-/eingefahren etc.) sein, und/oder mindestens ein ATP-Symbol, insbesondere ein ETCS-Betriebsartensymbol, sein bzw. umfassen.

Insbesondere kann durch die HUD-Einheit auch mindestens ein virtuelles Streckensignal bzw. ein Symbol zur In-Cab-Signalisierung im Blickfeld des Fahrers dargestellt werden.

Die bildgebende HUD-Einheit kann eine an sich bekannte Bauweise haben und wird über eine geeignete HUD-Bilddatenleitung vom darstellenden Rechner mit Bilddaten versorgt. Auf die gewählte Bauart des HUD kommt es grundsätzlich ebenfalls nicht an. Die HUD-Einheit kann z.B. in CRT- oder LCD-Technik, oder auch in DLP-Technik, mit Lichtwellenleitern oder auch in OLED-Technik realisiert sein. Bevorzugt wird LCD-Technik mit vergleichsweise einfacher und robuster Optik eingesetzt. Die bildgebende HUD-Einheit kann insbesondere eine Projektionseinheit zur Erzeugung eines Frontsichtbildes durch Projektion auf eine Projektionsfläche als Anzeigefläche umfassen. Als durchsichtige Anzeigefläche kann eine separate transparente Scheibe oder unmittelbar die Front- bzw. Windschutzscheibe des Triebfahrzeugs dienen. Die Anzeigefläche ist zumindest teilweise, vorzugsweise weitgehend durchsichtig bzw. lichtdurchlässig und erlaubt, ggf. auch polarisationsabhängig, das Anzeigen eines Bildes, das durch die HUD-Einheit erzeugt wird. Die Anzeigefläche kann dabei ein integrierter Bestandteil der HUD-Einheit, z.B. als sog. Combiner, sein oder nicht als Bestandteil der HUD-Einheit d.h. getrennt hiervon, z.B. durch die Frontscheibe des Fahrzeugs, gebildet sein. Als Anzeigefläche kann z.B. auch eine polarisationsabhängig reflektierende Spezialfolie innenseitig der Frontscheibe dienen.

Sicherheitsrelevante Information wird im Frontsichtbild durch die HUD-Einheit angezeigt und soll bzw. muss somit einerseits inhaltlich korrekt und andererseits auch für den Fahrzeugführer sichtbar angezeigt werden.

Zur Lösung der erstgenannten Aufgabe wird gemäß einem wesentlichen Kerngedanken der Erfindung eine Prüfeinheit bzw. Überwachungseinheit (Engl. monitoring unit) vorgeschlagen, welche zum Prüfen bzw. Überwachen, insbesondere zum rechentechnischen und sicherheitsgerichteten Prüfen, von sicherheitsrelevanten Bilddaten konfiguriert ist und mit der HUD-Bilddatenleitung verbunden ist. Hierzu kann die Prüfeinheit insbesondere eine oder mehrere rechentechnische Komponenten umfassen. Der Prüfeinheit können zumindest Bilddaten, welche dem sicherheitsrelevanten Bildbereich zugeordnet sind, sowie der entsprechende vom sicheren Rechner übermittelte Parameter zugeführt werden. Die Prüfeinheit kann insbesondere leitungstechnisch an der Bilddatenleitung angeschlossen sein. Mindestens eine der rechentechnischen Komponenten der Prüfeinheit ist bevorzugt programmierbar ausgeführt.

Erfindungsgemäß ist die Prüfeinheit zur Lösung der genannten ersten Aufgabe weiterhin konfiguriert, um einen sicherheitsgerichteten Vergleich, insbesondere gerichtet auf inhaltliche Korrektheit, auf Basis zugeführter Bilddaten und Parameter durchzuführen. Somit kann durch die Prüfeinheit die inhaltlich korrekte Darstellung (Engl. representation) zumindest in den Bilddaten selbst, und indirekt auch deren inhaltlich korrekte Anzeige im Frontsichtbild, gewährleistet werden. Dank der Prüfeinheit ist eine sichere, z.B. redundante Rechnerarchitektur für den darstellenden Rechner, nicht erforderlich. Es können somit preiswerte gängige COTS-Rechner, z.B. PC-Architekturen, und auch gängige (unsichere) Betriebssystem eingesetzt werden. Die Implementierung des sicherheitsgerichteten Vergleichs an sich kann hierbei z.B. der Lehre aus EP 2 353 089 B1 oder EP 2 254 039 B1 entsprechen, bei welchen aus den zu überwachenden Bilddaten Prüfcodes errechnet werden die entweder mit einem entsprechend dem Eingangsparameter ausgewählten Referenzcode verglichen werden, oder es wird aus dem aktuellen Prüfcode, z.B. über eine Lookup-Tabelle, ein Referenzparameter ermittelt, welcher mit dem aktuellen Eingangsparameter verglichen wird. Im Falle einer Nichtübereinstimmung liegt ein Fehlerfall vor, und die Prüfeinheit kann eine sicherheitsgerichtete Reaktion auslösen, z.B. zumindest die unzuverlässige Information ausblenden bzw. überblenden, oder die HUD-Einheit abschalten, eine Meldung an den übergeordneten sicheren Rechner senden, eine Darstellungsänderung des darstellenden Rechners bewirken usw.

Erfindungsgemäß ist die Prüfeinheit konfiguriert um die folgenden Funktionen rechentechnisch zu implementieren:
i) die Prüfeinheit prüft die zugeführten Bilddaten, insbesondere eines vorbestimmten und/oder vom sicherheitsrelevanten Bildbereich verschiedenen Bildbereichs, auf Darstellung eines vorbestimmten Sicherheitsmerkmals; oder
ii) die Prüfeinheit bewirkt selbst die Darstellung eines vorbestimmten Sicherheitsmerkmals in den Bilddaten, welche der HUD-Einheit zugeführt werden, z.B. ausgangseitig der Prüfeinheit; und
iii) die Prüfeinheit überwacht eine Bestätigung hinsichtlich einer erfolgten Anzeige des Sicherheitsmerkmals durch die HUD-Einheit.

Diese Funktionen sind rechentechnisch, insbesondere anhand der Komponente(n) der Prüfeinheit in Software bzw. durch FPGA-Konfiguration oder dgl., vergleichsweise einfach implementierbar und können im Betrieb insbesondere parallel zur Prüfung des einen oder mehrerer sicherheitsrelevanter Bildbereiche ausgeführt werden. Die Funktionen sind kombinierbar.

Die o.g. Funktion i) ist insbesondere von Vorteil, wenn das erfindungsgemäße Sicherheitsmerkmal durch den als unsicher betrachteten darstellenden Rechner erzeugt werden soll. Mit Funktion ii) kann aufgrund der sicheren Gestaltung der Prüfeinheit eine Überprüfung entfallen. Funktion iii) erlaubt z.B. die inhärente Prüfung durch Einbindung des Betrachters bzw. Fahrzeugführers als Rückkopplungsinstanz, wenn dieser in Reaktion auf das erfindungsgemäße Sicherheitsmerkmal nutzergesteuert eine Bestätigung bewirkt, z.B. an einer sicheren Eingabevorrichtung.

Das Sicherheitsmerkmal wird in bevorzugten Ausführungsformen insbesondere im Frontsichtbild visuell angezeigt (Engl. displayed) werden. Eine visuelle Sichtbarkeit (Engl. visibility) des bestimmungsgemäßen Sicherheitsmerkmals für den Fahrer ist besonders bevorzugt, jedoch nicht in jedem Fall zwingend erforderlich, auch eine maschinenlesbare Ausprägung und/oder im Frontsichtbild auf der Anzeigefläche nicht sichtbare Bildgebung liegt im Rahmen der Erfindung. In diesem Fall muss zumindest in denjenigen Bilddaten die der HUD-Einheit zugeführt werden eine Darstellung (Engl. representation) des bestimmungsgemäßen Sicherheitsmerkmals erfolgen bzw. vorliegen. In beiden Fällen kann entweder der darstellende Rechner oder die Prüfeinheit das Sicherheitsmerkmal in den Bilddaten darstellen.

Das Sicherheitsmerkmal kann insbesondere als pixelformatierte Grafik dargestellt sein, z.B. als optischer und vorzugsweise auch visuell sichtbare Kennzeichnung in der Anzeigefläche. Das Sicherheitsmerkmal ist zweckbestimmt sicherheitsgerichtet, d.h. nicht zu Informationszwecken hinsichtlich fahrtrelevanter Größen bzw. Parameter an den Fahrer bestimmt, jedenfalls nicht primär hierzu bestimmt. Das Sicherheitsmerkmal soll insbesondere nicht verwechselbar sein mit bestimmungsgemäß angezeigter Bildinformation.

Das vorgeschlagene Sicherheitsmerkmal ist somit bevorzugt ein grafisches Merkmal und insbesondere ein sicherheitsgerichtetes Bildmerkmal, das der funktionellen Sicherheit dient. Es ist vorzugsweise ein grafisches Merkmal, das zumindest in den Bilddaten abgebildet bzw. dargestellt ist. Das Sicherheitsmerkmal kann insbesondere pixelformatiert in den Bilddaten dargestellt sein und mehrere Bildpixel umfassen. Als Sicherheitsmerkmal kommen unterschiedlichste Formen, Grafiken, Symbole oder dgl. in Betracht, die zeitweise statisch oder zeitvariabel dargestellt oder angezeigt werden.

Beispielsweise kann als Sicherheitsmerkmal zu jedem sicherheitskritischen Bildbereich eine vorbestimmte Hervorhebung, z.B. eine farblich abgehobene Umrandung, vorgesehen werden anhand welcher der Nutzer zugleich erkennen kann, dass die sicherheitskritische Information von der Prüfeinheit als korrekt geprüft wurde. Es kann auch ein gemeinsames Sicherheitsmerkmal für das gesamte Bild des HUD, z.B. als spezielles Symbol visuell angezeigt werden. Das Sicherheitsmerkmal kann z.B. auch zeitvariabel und/oder positionsvariabel, z.B. als drehendes oder bewegtes Merkmal, z.B. in Abhängigkeit der Fahrgeschwindigkeit drehendes Symbol dargestellt werden.

Das Sicherheitsmerkmal kann in Form von mindestens einem oder mehreren Grafikinformationen, z.B. als für den Fahrer erkennbares Symbol, im laufenden Betrieb zusätzlich zu und/oder unabhängig von Fahrtinformationen, oder auch als zeitweise eingeblendeter eigenständiger Bildinhalt realisiert sein, z.B. zur Bestätigung der Sichtbarkeit bei Fahrtbeginn bzw. Initialisierung des Systems.

Das bestimmungsgemäß sicherheitsgerichtete Sicherheitsmerkmal kann unabhängig vom und insbesondere wahlweise zusätzlich zu allen aktuell betriebsbedingt anzuzeigenden Informationen, umfassend sicherheitsrelevante und ggf. nicht sicherheitsrelevante Informationen, dargestellt werden. Insbesondere kann es zusätzlich zum und/oder unabhängig vom betriebsrelevanten Bildinhalt, welcher der darstellende Rechner parameterabhängig generiert, in den Bilddaten dargestellt und insbesondere visuell im Frontsichtbild angezeigt werden.

Bereits durch die überraschend einfache Kombination aus der vorgeschlagenen Prüfeinheit und dem vorgeschlagenen Sicherheitsmerkmal, das zumindest datentechnisch in den Bilddaten zur HUD-Einheit dargestellt ist, kann auf eine fehlerfreie Funktion des typischerweise als unsicher zu betrachtenden darstellenden Rechners geprüft werden und zugleich eine fehlerfreie Funktion der HUD-Einheit, insbesondere die Sichtbarkeit des Frontsichtbilds überprüft werden. Das Sicherheitsmerkmal wird jedoch besonders bevorzugt visuell durch die HUD-Einheit angezeigt, insbesondere für den Nutzer sichtbar angezeigt. Die Ausprägung des Sicherheitsmerkmals kann hierbei unterschiedlichste Formen haben, es handelt sich jedoch typisch um Pixeldaten, welche eine entsprechende Bildgebung durch die HUD-Einheit bewirken.

Das Sicherheitsmerkmal dient der funktionalen Sicherheit und erlaubt es erfindungsgemäß, auf Verfügbarkeit bzw. bestimmungsgemäße Funktion der HUD-Einheit zu prüfen. Die Prüfung kann dabei automatisiert durch die Sicherheitsvorrichtung, insbesondere unter Verwendung der Prüfeinheit, und/oder unter Einbindung des Fahrzeugführers erfolgen.

Der vorstehende erste Erfindungsaspekt ermöglicht zwei grundsätzliche Methoden zur Überprüfung der optischen Verfügbarkeit bzw. bestimmungsgemäßen Funktion der HUD-Einheit:
Einerseits kann nach einem ersten Prinzip durch den darstellenden Rechner und die HUD-Einheit zu bestimmten Zeitpunkten, z.B. sporadisch oder zyklisch im Betrieb oder ggf. nur bei Betriebsbeginn, und in definierter Weise als Sicherheitsmerkmal eine Grafik eingeblendet werden, auf die der Fahrzeugführer anweisungsgemäß reagieren muss, z. B. durch Tastendruck. Wenn diese Bestätigung nicht innerhalb vorgegebener Zeit erkannt wird, insbesondere durch die Prüfeinheit (vgl. Funktion iii) oben), löst diese eine sicherheitsgerichtete Reaktion aus, z. B. kann die Prüfeinheit ein Überdecken kritischer Fahrtinformation, ein Abschalten der HUD-Einheit, einen Neustart des Systems, oder dgl. auslösen. Alternativ und/oder ergänzend kann die Darstellung des Sicherheitsmerkmals auch bspw. durch eine mit der Prüfeinheit verbundene Sensorik oder dgl. automatisch überwacht werden. In bevorzugter Ausführungsform nach diesem ersten Prinzip erhält die Prüfeinheit eine Bestätigung hinsichtlich einer erfolgten d.h. optisch wirksamen Anzeige des Sicherheitsmerkmals durch die HUD-Einheit, wobei die Prüfeinheit eingerichtet und konfiguriert ist, eine entsprechend erwartete Bestätigung zu überwachen. Dieses erste Prinzip nutzt insbesondere o.g. Funktion iii) der Prüfeinheit. Hierbei wird unterstellt, dass die optischen Eigenschaften der HUD-Einheit nach einer Bestätigung unverlierbar sind, d.h. die HUD-Einheit weiterhin korrekt und sichtbar anzeigen wird. Dementsprechend sollte das Intervall zwischen zwei Aufforderung zur Bestätigung kürzer eingestellt sein, als die vorbestimmte Fehleroffenbarungszeit der HUD-Einheit. Typischerweise dürfte hierzu bereits eine Quittierung bei jedem Fahrtantritt bzw. Fahrzeugführerwechsel ausreichen. Die Einbeziehung von Nutzer-Feedback durch die Bestätigungseingabe erlaubt eine inhärente Rückkopplung und Bestätigung der korrekten Anzeige des Sicherheitsmerkmals ohne aufwendige und anfällig Bildverarbeitungstechnik, z.B. mittels einer Kamera.

Andererseits ist auch eine Wirkweise bzw. ein zweites Prinzip ohne Nutzerbestätigung oder automatisiertes Erkennen der Sichtbarkeit des Sicherheitsmerkmals realisierbar. Hierbei kann insbesondere o.g. Funktion i) und/oder Funktion ii) der Prüfeinheit genutzt werden. Wenn der Nutzer die Pflicht hat, das Sicherheitsmerkmal, z.B. eine bestimmte Symbolik, als Voraussetzung für die Verwertbarkeit bzw. Verlässlichkeit der Informationen im Frontsichtbild erkennen zu müssen, insbesondere zu jeder Zeit während der Fahrt, kann aus der Abwesenheit oder inkorrekten visuellen Anzeige des Sicherheitsmerkmals im Fronsichtbild auf einen Fehler geschlossen werden (Fehleroffenbarung). In diesem Fall kann der Nutzer selbst die Anzeige außer Betracht lassen und/oder eine sicherheitsgerichtete Reaktion ableiten, z. B. Abbremsen, da er sich nicht auf im Frontsichtbild angezeigte Information verlassen kann. Bei dieser Wirkweise muss die Prüfeinheit lediglich auch die korrekte Darstellung des Sicherheitsmerkmals in den Bilddaten überwachen bzw. prüfen, in analoger Weise zur Überwachung sonstiger sicherheitsrelevanter Bildinhalte. Beim zweiten Prinzip ist eine gesonderte Bestätigung der Verfügbarkeit bzw. Funktionsfähigkeit der HUD-Einheit nicht zwingend erforderlich, sofern dieses Prinzip mit einer Nutzungsanweisung an den Fahrzeugführer verbunden wird. In diesem Fall kann bzw. darf der Fahrzeugführer sich auf Anzeigen durch die HUD-Einheit nur berufen bzw. verlassen, wenn das erfindungsgemäße Sicherheitsmerkmal für den Fahrzeugführer sichtbar und in vorgegebener Weise im Frontsichtbild angezeigt wird. Hierbei stellt die Prüfeinheit sicher, dass das Sicherheitsmerkmal, beispielsweise in Form einer erkennbaren Bereitschaftsanzeige tatsächlich korrekt und bestimmungsgemäß in den Bilddaten dargestellt ist. Bei fehlerhafter Darstellung einer oder mehrerer sicherheitskritischer Informationen in den Bilddaten für das Frontsichtbild kann die Prüfeinheit vorteilhaft die Anzeige des Sicherheitsmerkmals verhindern oder z.B. eine Fehlfunktion anzeigen. Bei nicht bestimmungsgemäßer Anzeige, z.B. bei Abwesenheit, des Sicherheitsmerkmals soll der Fahrzeugführer grundsätzlich Informationen im Frontsichtbild nicht berücksichtigen.

Beim voranstehenden ersten Prinzip dient das Sicherheitsmerkmal primär dazu, eine Bestätigung auszulösen, die an die Prüfeinheit übermittelt wird. Sofern diese Bestätigung innerhalb vorgegebener Zeit nach erzeugen bzw. einblenden des Sicherheitsmerkmals von der Prüfeinheit empfangen wird, ist die Sichtbarkeit des Frontsichtbilds als gewährleistet anzunehmen. Die Bestätigung kann hierbei entweder nutzergesteuert durch den Fahrzeugführer selbst ausgelöst werden, etwa an einer geeigneten Eingabevorrichtung wie beispielsweise einem Taster oder Fußschalter erfolgen. Die Bestätigungseingabe kann auch automatisiert durch die Sicherheitsvorrichtung an die Prüfeinheit rückgekoppelt werden, beispielsweise anhand eines geeigneten Sensors oder eines Bilderkennungssystems mit Kamera im Führerstand. Vorbestimmte Eigenschaften des Sicherheitsmerkmals können hierbei Hardware- und Softwareaufwand für die Bilderkennung erheblich vereinfachen.

Besonders bevorzugt können beide Prinzipien kombiniert angewendet werden, d. h. die Prüfeinheit überprüft eine bestimmungsgemäß korrekte Darstellung des Sicherheitsmerkmals einerseits und die optische oder sichtbare Anzeige des Sicherheitsmerkmals wird zudem durch geeignete Rückkopplung an die Prüfeinheit überwacht.

Gemäß beiden vorstehenden Prinzipien wird als besonders bevorzugt vorgeschlagen, dass die Anzeigeeinrichtung allgemein eingerichtet ist, um ein sicherheitsgerichtetes Sicherheitsmerkmal in den Bilddaten darzustellen (Engl. to represent), zumindest in denjenigen Teil der Bilddaten die der HUD-Einheit zugeführt werden. Das Sicherheitsmerkmal ist vorzugsweise dazu bestimmt, eine vorbestimmte sicherheitsgerichtete Bildgebung durch die HUD-Einheit zu bewirken, die es erlaubt, auf bestimmungsgemäße Funktion der HUD-Einheit zu prüfen.

Die Prüfeinheit ist besonders bevorzugt physisch getrennt vom darstellenden Rechner realisiert und kann z.B. als separates Modul bzw. Sicherheitsmodul ausgeführt sein. Ein solches Modul kann mit einem Eingang an die HUD-Bilddatenleitung und mit einem Ausgang am Bilddateneingang der bildgebenden HUD-Einheit angeschlossen werden. Somit kann die Prüfeinheit z.B. zur modularen Nachrüstung der HUD-Einheit dienen. Die Prüfeinheit selbst ist im Sinne der Sicherheitstechnik zertifizierbar bzw. sicherheitszertifiziert.

Die Bilddaten sind vorzugsweise digital formatiert und/oder als Pixeldatenstrom und können seriell und/oder parallel in beliebiger Signaltechnik übertragen werden, z.B. mittels jeder gängigen Technik zur Bilddatenübertragung. Bevorzugt wird der Bilddatenstrom über LVDS auf der HUD-Bilddatenleitung übertragen.

Die Prüfeinheit umfasst mindestens eine rechentechnische Komponente, insbesondere eine oder mehrere integrierte Schaltungen zur digitalen Datenverarbeitung, anhand welcher die Prüfeinheit zumindest einen Teil der Bilddaten, insbesondere sicherheitsrelevante Bilddaten, die sie vom darstellenden Rechner erhält, auf inhaltliche Korrektheit prüfen kann. Die Prüfeinheit verwendet vorzugsweise eine oder mehrere digitale integrierte Schaltungen als rechentechnische Komponenten, wie beispielsweise FPGA, DSP, ASIC oder dergleichen. Bevorzugt ist die Prüfeinheit eingerichtet und konfiguriert, um einen sicherheitsgerichteten Vergleich, insbesondere zur Prüfung auf inhaltlich korrekte Darstellung, auf Basis zugeführter Bilddaten und des bzw. der entsprechenden Parameter durchzuführen. Der Vergleich an sich kann dabei in an sich bekannter Weise durch rechentechnische Verarbeitung, insbesondere der Bilddaten, sowie Prüfung auf inhaltliche Übereinstimmung mit dem zugeführten Parameter beruhen.

Insbesondere die erfindungsgemäße Prüfeinheit erlaubt es, herkömmliche Technik für die HUD-Einheit zu verwenden und einen herkömmlichen, im Sinne der Sicherheitstechnik unsicheren Rechner, etwa einen COTS-Rechner, für die Grafikerzeugung einzusetzen.

Bei den Bilddaten handelt es sich vorzugsweise um pixelformatierte Bilddaten, zur pixelbasierten Bildgebung anhand der HUD-Einheit. Das Sicherheitsmerkmal kann dabei insbesondere ein pixelformatiertes Merkmal in den Bilddaten sein, das zur funktionalen Sicherheit bestimmt ist. Das Sicherheitsmerkmal wird bevorzugt grafisch, ggf. unabhängig bzw. zusätzlich zum bestimmungsgemäß gewünschten Informationsinhalt, im Frontsichtbild angezeigt, zumindest aber in den Bilddaten dargestellt, welche der HUD-Einheit zugeführt werden. Bevorzugt ist das Sicherheitsmerkmal als visuell sichtbarer Grafikbestandteil im Frontsichtbild gestaltet. Jedenfalls soll das Sicherheitsmerkmal durch die HUD-Einheit bildgebend abgebildet werden können, sodass es zumindest maschinenlesbar ist, insbesondere sofern es nicht visuell angezeigt wird. Das Sicherheitsmerkmal kann insoweit als optisches Kennzeichen ausgeführt sein, welches zumindest maschinenlesbar die Bildgebung durch die HUD-Einheit beeinflusst und vorzugsweise visuell sichtbar im Fronsichtbild dem Benutzer angezeigt wird.

Eine visuell sichtbare Anzeige ist bevorzugt, da hierdurch insbesondere auch die Optik der HUD-Einheit in die Prüfung einbezogen werden kann. Die Optik, insbesondere eine durch den Nutzer individuell einstellbare Optik, wird als eine der relevanten Fehlerquellen hinsichtlich der Sichtbarkeit des Frontsichtbildes angesehen.

Der erste Erfindungsaspekt erlaubt insbesondere auch eine zuverlässige Fehleroffenbarung hinsichtlich der Verfügbarkeit bzw. Betriebsbereitschaft des Frontsicht-Displays.

Insbesondere bei Anwendung des vorstehend erstgenannten Prinzips ist die Prüfeinheit vorzugsweise eingerichtet und konfiguriert zur Überprüfung auf korrekte Darstellung des Sicherheitsmerkmals in den Bilddaten. Alternativ oder ergänzend kann die Prüfeinheit eingerichtet und konfiguriert sein, zum Einfügen des Sicherheitsmerkmals in die Bilddaten. In diesem Fall wird das Sicherheitsmerkmal nicht durch den unsicheren darstellenden Rechner erzeugt, sondern durch die Prüfeinheit, welche höheren Sicherheitsanforderungen genügt als der darstellende Rechner. Hierzu kann die Prüfeinheit das Sicherheitsmerkmal durch Veränderung der vom darstellenden Rechner erzeugten Bilddaten und Weiterleiten der so veränderten Bilddaten an die HUD-Einheit, erzeugen bzw. darstellen.

In bevorzugter Ausführungsform ist die Anzeigeeinrichtung konfiguriert, um ein vorbestimmtes bzw. zu Sicherheitszwecken zweckbestimmtes Sicherheitsmerkmal zumindest in den der HUD-Einheit zugeführten Bilddaten darzustellen (Engl. represent), wobei das Sicherheitsmerkmal eine vorbestimmte sicherheitsgerichtete Bildgebung durch die HUD-Einheit bewirkt, die es erlaubt, auf bestimmungsgemäße Funktion der HUD-Einheit zu prüfen. Hierbei wird bevorzugt weiterhin vorgesehen,
- dass der Prüfeinheit zumindest Bilddaten zugeführt werden bzw. zuführbar sind, welche dem Sicherheitsmerkmal entsprechen und die Prüfeinheit konfiguriert ist, um diese Bilddaten auf korrekte Darstellung, insbesondere korrekte grafische Darstellung, des Sicherheitsmerkmals zu prüfen, und/oder dass die Prüfeinheit konfiguriert ist zum Einfügen des Sicherheitsmerkmals in die Bilddaten und Weiterleiten der so veränderten Bilddaten an die HUD-Einheit; und / oder
- dass der Prüfeinheit eine Bestätigung hinsichtlich einer erfolgten Anzeige des Sicherheitsmerkmals durch die HUD-Einheit zugeführt wird bzw. zuführbar ist, und die Prüfeinheit konfiguriert ist, eine entsprechende Bestätigung zu überwachen.

Die Prüfeinheit kann rechentechnisch konfiguriert sein zur Überprüfung auf korrekte Darstellung des Sicherheitsmerkmals durch den darstellenden Rechner in den Bilddaten und/oder zum Generieren bzw. Einfügen des Sicherheitsmerkmals durch Veränderung der vom darstellenden Rechner erzeugten Bilddaten und Weiterleiten der so veränderten Bilddaten an die HUD-Einheit.

Für eine Rückkopplung bzw. Rückführung der Bestätigung einer erfolgten Anzeige des Sicherheitsmerkmals ist vorzugsweise vorgesehen, dass die Prüfeinheit einen Bestätigungseingang, insbesondere eine digitale Schnittstelle, aufweist. So wird der Empfang einer Bestätigung hinsichtlich einer Darstellung des sicherheitsgerichteten Sicherheitsmerkmal in den Bilddaten von einer beliebigen Quelle bzw. einem beliebigen Eingabegerät ermöglicht. Hierzu kann jegliche geeignete Schnittstelle insbesondere für digitale Datenkommunikation, unidirektional zum Datenempfang oder auch bidirektional, in der Prüfeinheit implementiert sein.

Der Bestätigungseingang der Prüfeinheit kann insbesondere, direkt oder indirekt, logisch oder physisch, mit einem sicheren Eingabegerät verbunden sein, etwa einem Taster oder Fußschalter, zwecks Eingaben durch den Fahrzeugführer, welcher damit die erfolgte Darstellung des Sicherheitsmerkmals quittiert. Prüfeinheit und Eingabegerät können insbesondere signaltechnisch sicher verbunden sein, ggf. auch über einen Sicherheitsrechner.

In einer bevorzugten Ausführungsform des Prinzips mit nutzerabhängigen Bestätigung nach dem ersten Erfindungsaspekt, kann die Prüfeinheit rechentechnisch konfiguriert sein zur Überprüfung auf visuelle Anzeige (Engl. "Display") des Sicherheitsmerkmals, diese Überprüfung umfassend ein Überwachen einer Nutzereingabe durch den Fahrzeugführer als Bestätigung zur Quittierung einer erfolgten visuellen Anzeige des Sicherheitsmerkmal innerhalb eines vorbestimmten Zeitfensters, wobei der Bestätigungseingang vorzugsweise mit einem nutzerbedienbaren Eingabegerät verbunden ist. Als Eingabegerät kommt z.B. ein separater Sicherheitstaster, eine Softkey-Taste an einem Touch-Display im DMI, oder auch ein Fußschalter in Betracht. Auch eine akustische Nutzereingabe ist denkbar.

Anstelle einer nutzergesteuerten Bestätigung kann auch eine automatisierte Rückkopplung der Sichtbarkeit oder zumindest optischen Wirkung in der HUD-Einheit erfolgen. Hierbei kann die Prüfeinheit konfiguriert sein zur Überprüfung auf optische und/oder visuelle Anzeige des sicherheitsgerichteten Bildmerkmals bzw. des Sicherheitsmerkmals, indem diese ein Auswertungssignal von einem Sensor überwacht, welcher mit dem Bestätigungseingang verbunden ist. Der Sensor kann z.B. ein halbleiterbasierter Bildsensor sein, welcher auf das Frontsichtbild ausgerichtet ist, um eine visuelle Anzeige zu erfassen, oder aber ein unmittelbar an der bildgebenden Quelle, z.B. eine TFT-LCD, der HUD-Einheit angeordneter optischer Sensor, wie eine und vorzugsweise mehrere Photo-Dioden im Randbereich des TFT-LCD der HUD-Einheit, um eine rein optische Anzeige zu erfassen.

Sofern jedoch alternativ oder ergänzend eine nutzergesteuerte Bestätigung vorgesehen wird, wird eine Realisierung bevorzugt bei welcher
- die Bilddaten pixelformatiert sind und das sicherheitsgerichtete Sicherheitsmerkmal zur visuellen Anzeige im Frontsichtbild für den Fahrzeugführer bestimmt und/oder pixelformatiert ist; und/oder
- die Prüfeinheit konfiguriert ist zur Überprüfung auf korrekte Darstellung (Engl. representation), insbesondere pixelformatierten Darstellung, des sicherheitsgerichteten Sicherheitsmerkmal, diese Überprüfung umfassend eine Überprüfung auf bestimmungsgemäß korrekte Darstellung, des sicherheitsgerichteten Sicherheitsmerkmals in den Bilddaten welche der HUD-Einheit zugeführt werden, wobei das sicherheitsgerichtete Sicherheitsmerkmal insbesondere durch den darstellenden Rechner in den Bilddaten dargestellt wird; und/oder
- die Prüfeinheit, insbesondere anhand einer rechentechnischen Komponente, die Darstellung des sicherheitsgerichteten Sicherheitsmerkmals bewirkt, indem die Prüfeinheit das sicherheitsgerichtete Sicherheitsmerkmal zur Anzeige im Frontsichtbild in die vom darstellenden Rechner erzeugten Bilddaten einblendet bzw. überblendet, insbesondere durch Veränderung der Darstellung ausgewählter Bildpixel.

Die Konfiguration der Prüfeinheit ist vorzugweise derart, dass die mindestens eine oder mehrere rechentechnischen Komponenten eine Sicherheitsfunktion implementieren und die Prüfeinheit dazu zumindest ausgewählte Teile der Bilddaten, insbesondere betreffend zu überwachende Bereiche mit sicherheitsrelevanten Informationen, über eine Bilddatenschnittstelle ausliest, die z.B. mit der HUD-Bilddatenleitung verbunden ist.

Besonders bevorzugt wird die Prüfeinheit als separates Hardware-Modul ausgeführt, insbesondere physisch getrennt vom darstellenden Rechner einerseits und vom Sicherheitsrechner (EVC) andererseits.

Insbesondere bei getrennter, bevorzugt modularer Bauweise kann die Prüfeinheit vorzugsweise eingangsseitig am Bilddateneingang der HUD-Einheit vorgesehen sein und somit ein Nachrüsten bestehender HUD-Hardware erlauben.

Weiterhin ist die Prüfeinheit vorzugsweise über einen sicheren logischen oder physischen Kanal mit einem übergeordneten sicheren Rechner, z.B. dem EVC, verbunden, welcher u.a. zu Vergleichszwecken darzustellende Parameter an die Prüfeinheit übermittelt.

Die HUD-Einheit für sich genommen und/oder die Anzeigeeinrichtung insgesamt kann Bestandteil eines Driver-Machine-Interface (DMI), insbesondere eines ETCS-fähigen DMI, sein. Dabei kann das DMI weiterhin ein Multifunktionsterminal mit mindestens einem DMI-Display, z.B. einem konventionellen TFT-Panel, umfassen und mindestens eine Eingabevorrichtung für Bedieneingaben aufweisen. Als Eingabevorrichtung kann z.B. ein Touch und/oder ein DMI-Display mit konfigurierbaren Softkeys oder dgl. am Display vorgesehen sein. Eine solche Eingabevorrichtung am DMI kann mit der Prüfeinheit verbunden sein, um zur Quittierung einer Anzeige des Sicherheitsmerkmals im Frontsichtbild Eingaben an die Prüfeinheit zu übermitteln. So wird z.B. zusätzlicher Hardwareaufwand für die Eingabevorrichtung vermieden, indem Eingabemittel eines bereits bestehenden DMI, z.B. eines Multifunktionsterminals genutzt werden.

In einer bevorzugten Gestaltung wird als bildgebende HUD-Einheit ein vergleichsweise robustes Head-Up-Display (HUD) vom LCD-Typ, insbesondere LCD-TFT Typ, vorgesehen. Dabei kann die HUD-Einheit ein Unterlicht, insbesondere ein LED-Backlight, und einen vom Unterlicht durchleuchtbaren Flüssigkristallbildschirm (LCD), insbesondere einen TFT-LCD, aufweisen welcher vom darstellenden Rechner angesteuert wird. Ferner hat die HUD-Einheit bevorzugt eine Projektionsoptik zur Erzeugung eines Frontsichtbildes, insbesondere eine bzgl. des Blickfelds einstellbare Projektionsoptik, z.B. zum einstellbaren projizieren auf die Frontscheibe, und/oder einen bzgl. des Blickfelds einstellbaren eigenen Combiner. Die Projektionsoptik projiziert dabei das vom Flüssigkristallbildschirm entsprechend der erhaltenen Bilddaten erzeugte Bild auf die vorgesehen Bildfläche.

In einer bevorzugten Gestaltung mit einem Head-Up-Display (HUD) vom LCD-Typ kann mindestens ein optoelektronischer Sensor an einer oder mehreren Pixelzellen, z.B. in einem Randbereich des Flüssigkristallbildschirms, zur optischen Erfassung der Bildgebung durch die Pixelzellen vorgesehen sein, und mit der Prüfeinheit verbunden werden. So kann anhand des optoelektronischen Sensors das vom LCD erzeugte Bild überwacht werden, insbesondere hinsichtlich der Anzeige des sicherheitsgerichteten Sicherheitsmerkmals und/oder auch hinsichtlich eines zusätzlich zum Sicherheitsmerkmal vorgesehenen zeitvariablen Kennzeichens, das insbesondere durch mindestens einen oder mehrere Randpixel gebildet wird. Ein zeitvariables Sicherheitsmerkmal bzw. Kennzeichen erlaubt eine Überprüfung dahingehend, dass die bildgebende Einheit des HUD nicht eingefroren ist bzw. das gewünschte Refresh-Verhalten des Bildes bzw. zeitliche Verhalten der Bild-Frames zeigt.

Die Prüfeinheit ist vorzugsweise eingerichtet bzw. konfiguriert, um berechnete Prüfcodes, insbesondere durch die rechentechnische Komponente aus Bilddaten berechnete Prüfcodes, und einen zugeführten entsprechenden Parameter, z.B. ausgehend vom sicheren Rechner, einem sicherheitsgerichteten Vergleich zuzuführen. Dazu kommt gleichwertig einer der beiden vorgenannten Vergleichsmodi in Betracht, d.h. ein Vergleich des Prüfcodes mit einem abhängig vom Parameter bestimmten Referenzcode, oder ein Vergleich des Eingangsparameters mit einem abhängig vom Prüfcode bestimmten Referenzparameter. Der sicherheitsgerichtete von zumindest einem ausgewählten Teil der Bilddaten, welche die mindestens eine sicherheitsrelevante Information darstellen, und in einem jeweils zugeordneten sicherheitsrelevanten Bildbereich anzuzeigen sind, erlaubt die Prüfung auf inhaltlich korrekte Anzeige relevanter Information, im Einklang mit dem aktuellen Parameter (als anzuzeigende Ist-Eingangsgröße) im Frontsichtbild.

In bevorzugter Gestaltung umfasst die Prüfeinheit dementsprechend als wesentliche funktionale Bestandteile zumindest einen Prüfcode-Generator, einen Referenzwertspeicher und einen Vergleicher, welche z.B. gemeinsam oder getrennt, logisch oder physisch, durch eine oder mehrere rechentechnische Hardware-Komponenten der Prüfeinheit realisiert sein können. Der Prüfcode-Generator generiert dabei Prüfcodes, z.B. als Hash-Werte, CRC-Codes oder dgl., zumindest aus einer Auswahl der zu überwachenden pixelformatierten Bilddaten. Der Referenzwertspeicher, z.B. eine Lookup-Tabelle oder dgl., liefert je nach Vergleichsmodus Referenzcodes abhängig vom aktuellen Eingangsparameter oder Referenzparameter abhängig vom aktuellen Prüfcode. Der Vergleicher vergleicht den aktuellen Prüfcode mit dem Referenzcode oder den aktuellen Eingangsparameter mit dem Referenzparameter.

Besonders bevorzugt hat die Prüfeinheit eine zweistufige Architektur mit einer ersten Rechenkomponente, z.B. einem FPGA, welche eingerichtet ist, um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten für ein Display bereitzustellen. Diese zweistufige Architektur ist mit einer zweiten Rechenkomponente, z.B. einem FPGA, versehen, welche eingerichtet ist um von der ersten Rechenkomponente bereitgestellte Bilddaten zu überprüfen, durch Berechnung eines Prüfcodes für Bilddaten, welche zur Anzeige in dem vorbestimmten Bildbereich bestimmt sind. Hierbei kann die erste Rechenkomponente vorzugsweise das Sicherheitsmerkmal, insbesondere pixelformatiert, durch Modifikation der eingangsseitig erhaltenen Bilddaten einfügen. Die zweite Rechenkomponente ermöglicht es dann diese Bilddaten-Modifikation zu überprüfen, insbesondere anhand eines Vergleichs eines berechneten Prüfcodes mit einem erwarteten Referenzcode. Bei diesem Vergleich liegt kein eigentlicher Eingangsparameter dem Vergleich zugrunde, sondern der erwartete, korrekte Systemzustand bzgl. der Darstellung des Sicherheitsmerkmals in den ausgegebenen bzw. ausgangsseitigen Bilddaten, die der HUD-Einheit zugeführt werden. Diese Architektur ist sicherheitstechnisch vorteilhaft und erfüllt hohe Sicherheitsanforderungen, z.B. SIL-2 und höher.

Die erste und/oder zweite Rechenkomponente sind bevorzugt Hardware-Komponenten, z.B. getrennte ICs, und können dabei insbesondere die Funktion eines Prüfcode-Generators implementieren. Ein Vergleicher, oder ggf. bei zwei redundanten Prüfcode-Generatoren auch zwei redundante Vergleicher, kann bzw. können ggf. durch eine dritte und ggf. vierte Hardware-Komponente implementiert sein. Die erste und zweite Rechenkomponente sind vorzugsweise diversitär, z.B. mit ICs unterschiedlicher Typen, realisiert. Entsprechendes gilt vorzugsweise ggf. auch für die dritte und ggf. vierte Komponente.

Die Erfindung betrifft weiterhin als unabhängig erfindungserheblichen Aspekt auch ein Verfahren mit den Merkmalen nach Anspruch 11, insbesondere zur Realisierung des ersten Aspekts der Erfindung. Die vorstehenden und nachfolgenden bevorzugten Merkmale sind auch vorteilhaft im Verfahren anwendbar bzw. mit diesem kombinierbar.

In einer bevorzugten Variante der Erfindung wird das sicherheitsgerichtete Sicherheitsmerkmal bestimmungsgemäß veränderlich bzw. variabel, insbesondere zeitvariabel und/oder positionsvariabel, in einem sichtbaren Bereich des Frontsichtbilds angezeigt. Somit kann der Nutzer u.a. erkennen, ob die Aktualisierung der Anzeige erfolgt, bzw. das Frontsichtbild aktuell ist. Das Sicherheitsmerkmal kann z.B. in Form eines zeitlich fortscheidenden Kennzeichens, z.B. einer in einem Bildbereich umlaufenden Markierung oder dergleichen angezeigt werden, wobei die Veränderung z.B. proportional zur aktuellen Fahrgeschwindigkeit sein kann. Als Sicherheitsmerkmal kommt z.B. auch Grafik in Form einer geeigneten wegabhängigen Abbildung der seit dem letzten Stillstand zurückgelegten Fahrstrecke, usw. in Betracht.

Die Erfindung ist ohne weiteres skalierbar auf eine Vielzahl sicherheitsrelevanter Anzeigen im Frontsichtbild. Somit kann der darstellende Rechner mehrere, jedenfalls mindestens zwei sicherheitsrelevante Informationen darstellen, wobei eine erste Information in einem ersten Bildbereich angezeigt wird und eine zweite Information in einem zweiten Bildbereich angezeigt wird, und die Prüfeinheit zwecks Prüfung, jeweils unabhängig einen rechentechnischen Vergleich von Bilddaten zur ersten Information im ersten Bildbereich mit einem ersten entsprechenden Parameter vornimmt und einen rechentechnischen Vergleich von Bilddaten zur zweiten Information im zweiten Bildbereich mit einem zweiten entsprechenden Parameter vornimmt. Die Prüfeinheit erlaubt dank der rechentechnischen Komponenten ohne Weiteres eine Parallelverarbeitung zur Prüfung einer Vielzahl von Bildbereichen. Hierzu kommt insbesondere jeder der beiden vorgenannten Vergleichsmodi in Betracht.

Die Prüfeinheit kann bei negativem Prüfergebnis insbesondere die jeweils fehlerhafte Information ausblenden, überblenden und/oder als fehlerhaft markieren, sodass der Fahrzeugführer sich nicht auf diese Information berufen kann.

Bevorzugt wird das sicherheitsgerichtete Sicherheitsmerkmal neben den bzw. zusätzlich zu den mindestens zwei dauerhaft angezeigten sicherheitsrelevanten Informationen visuell angezeigt, insbesondere jedoch nur bei positivem Prüfergebnis im Nominalzustand angezeigt. So kann bzw. sollte z.B. eine grüne Umrandung als Sicherheitsmerkmal ausbleiben, wenn die relevante Information von der Prüfeinheit als nicht korrekt dargestellt erkannt wird.

Das Sicherheitsmerkmal kann dauerhaft oder zeitvariabel, ggf. auch nur sporadisch, periodisch oder in zufälligen Intervallen angezeigt werden, z.B. wenn es bedarfsweise bestätigt werden soll. Die Verwendung grafischer Darstellung des Sicherheitsmerkmals erlaubt eine hohe Gestaltungsfreiheit hinsichtlich der konkreten Umsetzung, insbesondere bei Darstellung durch den programmierbaren darstellenden Rechner.

Die Anzeigeeinrichtung bzw. das Verfahren gemäß dem ersten Aspekt der Erfindung kann insbesondere vorteilhaft eingesetzt werden um mindestens
- eine sicherheitsrelevante Fahrtinformation, insbesondere eine überwachte Geschwindigkeit, Bremsinformation oder Gefahreninformation anzuzeigen; und/oder
- mindestens eine TCMS-Information anzuzeigen; und/oder
- mindestens ein virtuelles Streckensignal bzw. Symbol zur In-Cab-Signalisierung anzuzeigen; und/oder
- mindestens ein ATP-Symbol, insbesondere ein ETCS-Betriebsartensymbol anzuzeigen;
und diese für Fahrzeugführer ergonomisch im Frontsichtbild darzustellen. Im Frontsichtbild können ein Vielzahl Informationen angezeigt werden, wobei jedoch zur Ergonomie eine reduzierte, relevante Auswahl aus den Informationsanzeigen des DMI getroffen werden sollte.

Als besonders vorteilhaft wird die Erfindung in Verbindung mit der Anzeige von virtuellen Streckensignale bzw. Symbolen zur Signalisierung im Führerstand bzw. in Verbindung mit einem ATP-System angesehen, weil hier ein sicheres HUD entscheidende Vorteile mit sich bringt, s. weiter oben.

Weiterhin kann die Prüfeinheit genutzt werden um eine sicherheitsgerichtete Reaktion auszulösen bei Ausbleiben der Bestätigung und/oder bei Negativergebnis des sicherheitsgerichteten Vergleichs. Dabei kann die Prüfeinheit als sicherheitsgerichtete Reaktion diverse Maßnahmen einleiten bzw. auslösen, z.B. ein Fehlersignal übermitteln, insbesondere an einen übergeordneten Sicherheitsrechner (EVC) und/oder an ein DMI, und/oder einen sicherheitsrelevanten Bildbereich ausblenden, überblenden und/oder als fehlerhaft markieren und/oder die HUD-Einheit abschalten.

### Zweiter Aspekt

Unabhängig vom vorstehenden ersten Erfindungsaspekt, oder auch ergänzend hierzu, wird gemäß einem zweiten Erfindungsaspekt eines besonders ergonomische Wachsamkeitsüberwachung im Führerstand eines Schienenfahrzeugs vorgeschlagen.

Hierzu wird ein System bzw. ein Verfahren zur Wachsamkeitsüberwachung vorgeschlagen, welches eine bildgebende HUD-Einheit als Anzeigeeinrichtung nutzt und nach dem Aufforderungsprinzip ein sicherheitsgerichtetes Sicherheitsmerkmal als Wachsamkeits-Aufforderung anhand der HUD-Einheit einblendet. Die Einblendung kann zeit- und/oder wegabhängig, insbesondere in vorbestimmten oder zufälligen Zeit- und/oder Wegintervallen, erfolgen.

Gemäß diesem zweiten Erfindungsaspekt überwacht das System bzw. die Anzeigeeinrichtung, insbesondere die Prüfeinheit, eine Quittierung durch den Fahrzeugführer bzgl. einer erfolgten visuellen Anzeige des Sicherheitsmerkmals innerhalb eines vorbestimmten Zeitfensters. Die Quittierung erfolgt insbesondere anhand eines am Bestätigungseingang angeschlossenen Eingabegeräts. Das Eingabegerät kann insbesondere Bestandteil einer Sicherheitsfahrschaltung sein bzw. hierfür geeignet sein. Weiterhin löst das System bzw. die Einrichtung, insbesondere die Prüfeinheit, bei Ausbleiben der Quittierung, eine sicherheitsgerichtete Reaktion aus, z.B. indem insbesondere ein sicherheitsgerichtetes Signal an einen Sicherheitsrechner (EVC) und/oder an ein DMI des Führerstands übermittelt wird.

In bevorzugter Ausführungsform ist dabei die Prüfeinheit mit einer Sicherheitsfahrschaltung nach UIC 641 und/oder VDE 0119-207-5 zur Wachsamkeitsprüfung verbunden. Die Prüfeinheit kann mittelbar oder unmittelbar z.B. mit einem Handtaster oder einem Fußpedal der Sicherheitsfahrschaltung verbunden sein, insbesondere signaltechnisch sicher verbunden sein z.B. über den Sicherheitsrechner.

Der zweite Aspekt erlaubt z.B. die Realisierung einer Art Anforderungs-SiFa unter Nutzung einer im HUD-Display ergonomisch angezeigte Anforderung. Hierdurch kann eine besonders ergonomische Weiterbildung der elektronischen SiFa nach dem Aufforderungsprinzip erzielt werden. Die Bestätigung der Wachsamkeit ist dabei bevorzugt nur innerhalb festgelegter durch einen Zufallsgenerator bestimmter Zeitintervalle möglich, wodurch ein Gewöhnungseffekt ausgeschlossen werden soll. Die geltende Intervalldauer ist jedoch für eine Rückkopplung an die Prüfeinheit nicht zwingend relevant, da jede rechtzeitige Bestätigung auf eine korrekte Anzeige des Sicherheitsmerkmals, das zugleich als Wachsamkeits-Aufforderung dient, im Frontsichtbild erkannt werden kann d.h. inhärent auch die erwartungsgemäße Funktion des HUD bestätigt.

Die Prüfeinheit kann die Einblendung selbst erkennen, z.B. bei Berechnung eines aktuell übereinstimmenden Prüfcodes zu einem vorbestimmten Bildbereich, in welchem die Wachsamkeits-Aufforderung anzuzeigen ist, und ggf. einen eigenständigen Timer auslösen zur Überwachung der Bestätigung.

Aufeinanderfolgende Einblendungen des Sicherheitsmerkmals als Wachsamkeits-Aufforderung anhand der HUD-Einheit erfolgen dabei vorzugsweise innerhalb eines maximalen Zeitintervalls, das deutlich kürzer ist als die vorbestimmte Fehleroffenbarungszeit der HUD-Einheit, besonders bevorzugt jedoch innerhalb von Intervallen, die durch entsprechende Vorschriften vorgegeben sind.

Die Sicherheitsfahrschaltung erkennt bei Negativergebnis der Wachsamkeitsüberwachung auf Unfähigkeit des Fahrzeugführers. Die resultierende sicherheitsgerichtete Reaktion kann, z.B. über den Sicherheitsrechner (EVC), insbesondere einen ETCS-konformen Sicherheitsrechner (European Vital Computer), einen Bremsvorgang auslösen.

Eine Prüfung auf Bestätigung bzw. Quittierung der Wachsamkeits-Aufforderung am HUD kann dabei, je nach Architektur entweder durch den Sicherheitsrechner oder die Prüfeinheit oder ggf. durch beide erfolgen. Die Prüfeinheit kann anhand einer solchen Prüfung zugleich auf bestimmungsgemäße Sichtbarkeit des Frontsichtbildes erkennen.

Die Realisierung einer Art Anforderungs-SiFa anhand eines HUD-Displays ist einerseits besonders ergonomisch, und erlaubt z.B. eine Erweiterung der herkömmlichen elektronischen SiFa durch das Aufforderungsprinzip. Die Bestätigung der Wachsamkeit kann dabei z.B. nur innerhalb festgelegter durch einen Zufallsgenerator bestimmter Zeitintervalle möglich sein, wodurch ein Gewöhnungseffekt ausgeschlossen werden soll. Insbesondere ist anhand der HUD-Einheit auch eine visuell variable Darstellung ermöglicht, die ebenfalls Gewöhnungseffekte reduzieren kann.

Weiterhin kann ergänzend zur visuellen Aufforderung auch eine zeitlich nachgelagerte akustische Aufforderung vorgesehen sein, die den Fahrzeugführer aufgrund der primären Aufforderung im Frontsichtbild des HUD inhärent an eine wachsamere Streckenbeobachtung erinnert.

Die Wachsamkeitsüberwachung mittels einer HUD-Einheit nach dem Aufforderungsprinzip kann mit Hilfe eines Handtasters oder eines Fußpedals, insbesondere auch nach dem vorgegebenen Sicherheitsintegritätslevel (z.B. SIL-4) realisiert werden.

Besonders bevorzugt kann somit die Wachsamkeitsüberwachung zugleich eingesetzt werden, um die visuelle Sichtbarkeit des Frontsichtbildes anhand der Prüfeinheit zu überprüfen bzw. überwachen, in welchem die Aufforderung der Wachsamkeitsüberwachung in Form einer grafischen Anzeige angezeigt wird. Aus einer rechtzeitigen Wachsamkeitsbestätigung durch den Fahrzeugführer, insbesondere zeitlich vor Ausgabe einer akustischen Warnung, kann inhärent auf ordnungsgemäße Verfügbarkeit bzw. Sichtbarkeit des Frontsichtbildes rückgeschlossen werden. Somit kann vorteilhaft eine doppelte Sicherheitsfunktion realisiert werden, wenn der erste und zweite Erfindungsaspekt in Kombination realisiert werden, z.B. indem die Wachsamkeitsbestätigung als Bestätigung der Anzeige des Sicherheitsmerkmals in der o.g. Funktion iii) genutzt wird. Dies wird durch die vorgeschlagene Prüfeinheit mit wenig Aufwand ermöglicht.

Einzelne bevorzugte Merkmale des ersten Aspekts, insbesondere auch die Merkmale der Unteransprüchen 2-5, sind vorteilhaft mit dem zweiten Aspekt kombinierbar und umgekehrt.

Die Erfindung betrifft schließlich auch ein Driver-Machine-Interface (DMI), insbesondere ein ETCS-fähiges DMI, für einen Führerstand eines Schienenfahrzeugs, welches eine Anzeigeeinrichtung nach dem ersten und/oder zweiten Erfindungsaspekt aufweist.

### Kurzbeschreibung der Zeichnungen

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen:
**FIG.1****:** zeigt schematisch Bestandteile eines Leit- und Sicherungssystems für Züge bzw. ATP-Systems, hier rein beispielhaft ein ETCS Level 2 System, das zum Fahren ohne streckenseitige Signale ausgelegt;
**FIG.2****:** zeigt eine schematische Innenansicht des Führerstands eines Schienenfahrzeugs mit einem DMI, das mit einem Frontsichtdisplay bzw. HUD ausgerüstet ist, aus der Perspektive des Fahrzeugführers;
**FIG.3****:** zeigt schematisch in Seitenansicht eine bevorzugte Ausführungsform einer Anzeigeeinrichtung für ein sicheres Führerstand-Frontsichtdisplay (Head-Up Display: HUD) eines Schienenfahrzeugs;
**FIG.4****:** ein beispielhaftes durch das HUD generiertes Frontsichtbild, das nebst sicherheitsrelevanten Informationen, u.a. der Fahrgeschwindigkeit, auch ein Sicherheitsmerkmal visuell anzeigt;
**FIG.5A-5B****:** eine Abfolge von zwei beispielhaften durch das HUD generierten Frontsichtbildern, die zwei verschiedene Sicherheitsmerkmale visuell anzeigen;
**FIG.6****:** ein Prinzip-Schaltbild eines zweiten Ausführungsbeispiels einer erfindungsgemäßen Anzeigeeinrichtung für ein sicheres Führerstand-Frontsichtdisplay;
**FIG.7****:** ein Prinzip-Schaltbild eines dritten Ausführungsbeispiels einer erfindungsgemäßen Anzeigeeinrichtung für ein sicheres Führerstand-Frontsichtdisplay;
**FIG.8****:** ein Prinzip-Blockdiagramm einer Prüfeinheit, z.B. für eines der Ausführungsbeispiele nach FIG.6-7;
**FIG.9****:** ein Prinzip-Schaltbild eines vierten Ausführungsbeispiels einer erfindungsgemäßen Anzeigeeinrichtung für ein sicheres Führerstand-Frontsichtdisplay; und
**FIG.10****:** als schematisches Blockdiagramm eine bevorzugte Architektur einer Prüfeinheit nach FIG.8 für eine erfindungsgemäße Anzeigeeinrichtung.

### Beschreibung von Ausführungsbeispielen anhand der Zeichnungen

Die Erfindung findet besonders bevorzugt Anwendung im Führerstand eines Schienenfahrzeugs, welches Ausrüstung, insbesondere einen Sicherheitsrechner und eine Funk-Kommunikationseinrichtung, für ein CBTC-System (Communication-Based Train Control) und/oder ein ATP-System aufweist (Automatic Train Protection) und dadurch geeignet ist, das Fahren ohne streckenseitige Signale zu ermöglichen. Bevorzugt wird die Erfindung in einem Triebfahrzeug 1 eingesetzt, das eine ETCS-Fahrzeugeinrichtung umfasst mit mindestens einem ETCS-Rechner (EVC), einem DMI, eine Wegmesseinrichtung, einer Funkinsbesondere GSM-R-Übertragungseinrichtung sowie vorzugsweise einem Balisenleser und einem Bremszugriff.

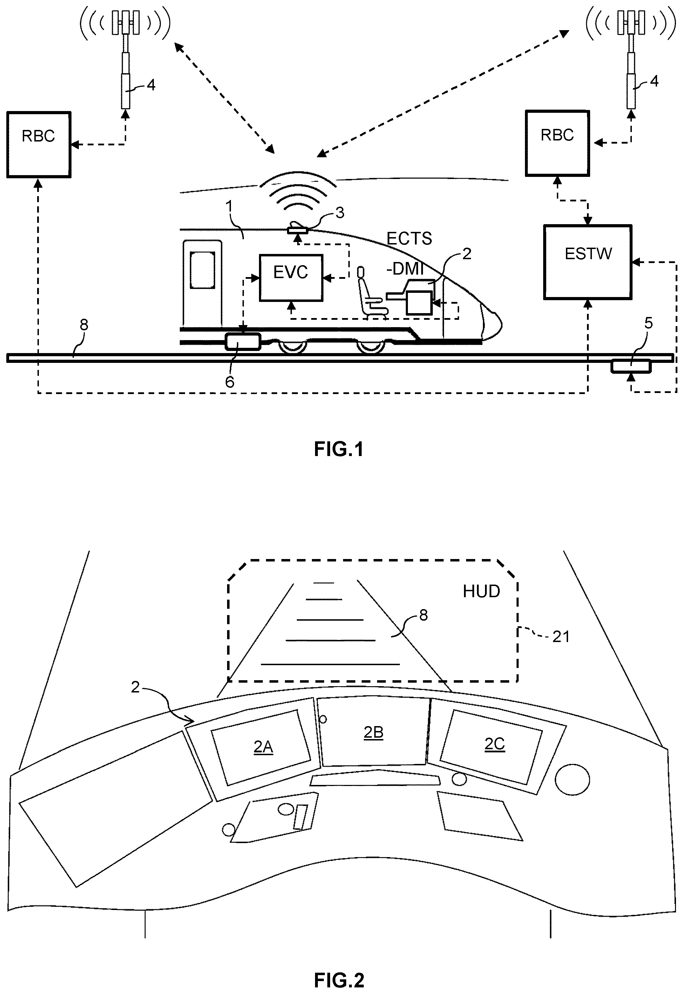

Rein beispielhaft ist hierzu das Prinzip eines ETCS Level 2 in FIG.1 veranschaulicht. Das Triebfahrzeug 1 umfasst u.a. einen ETCS-fähigen Sicherheitsrechner, den European Vital Computer, kurz EVC. Der EVC ist u.a. mit dem DMI 2 verbunden, das u.a. als ETCS-Monitor dient und dem Fahrzeugführer relevante Information anzeigt. Hierzu zeigt das DMI 2 typisch als DMI-Anzeigen u.a. die aktuelle Fahrgeschwindigkeit, die zulässige Geschwindigkeit, eine Vorausschau auf den Geschwindigkeitverlauf (ETCS Planning) und die aktuelle ETCS-Betriebsart bzw. DMI-Symbole an. Der EVC empfängt über eine Zugantenne 3 von stationären Funkantennen 4 (z.B. Typ GSM-R) relevante Daten zum Leiten und Sichern der Züge, u.a. Fahrerlaubnisdaten und Streckendaten. Das RBC (Radio-Block-Center) bildet die ETCS-Streckenzentrale, erteilt u.a. die Fahrerlaubnis und sendet die Streckendaten an das Triebfahrzeug 1 über Funk. Das RBC ist mit elektronischen Stellwerken ESTW entlang der Strecke verbunden, welche wiederum kabelgebunden mit ECTS-Streckenausrüstung, u.a. Gleisfreimeldern (nicht gezeigt) usw. verbunden sind. Im Gleis installierte Eurobalisen 5 dienen u.a. zur drahtlosen Positionsbestimmung bzw. -überwachung des Zuges. Das Triebfahrzeug 1 bzw. der Zug hat hierzu einen Balisenleser 6, der beim Überfahren Information der Eurobalisen 5 drahtlos ausliest und mit dem EVC verbunden ist. Der EVC überwacht u.a. automatisch die Einhaltung der Fahrerlaubnis und bremst bei Bedarf automatisch den Zug.

Ein Vorteil des ECTS (Level 2), und allgemein von CBTC- und/oder ATP-Systemen, liegt in der Möglichkeit, ohne streckenseitige Signale am Gleis fahren zu können, was insbesondere die Ausrüstungs- und Instandhaltungskosten reduziert. Insbesondere bei solchen Systemen ist die Nutzung eines HUD im Führerstand von Vorteil, weil ein HUD es ermöglicht, "virtuelle Streckensignale" grafisch einzublenden.

Eine Signalisierung per HUD bietet jedoch weitere Vorteile und Möglichkeiten, insbesondere durch die Fähigkeit, Signale während der Dauer ihrer Gültigkeit und/oder bedarfsweise anzuzeigen. Streckenseitige Signale und Gebotsschilder sind wegen ihrer statischen bzw. ortsfesten Montage ungeeignet, zeitlich veränderliche bzw. eingeschränkte Gebote, z.B. bei Baustellen zu vermitteln. Weiterhin ist ein Übersehen eins streckenseitigen Signals oder Gebotsschildes während des Vorbeifahrens ggf. kritisch. Wird die Signalisierung im Führerstand, z.B. im DMI 2, erzeugt können diese Probleme überwunden werden. Auch zeitlich veränderliche Informationen, z.B. auch ein elektronischer Buchfahrplan mit ggf. temporären Langsamfahrstellen, kann z.B. über das RBC per Funk datentechnisch übertragen und an das Triebfahrzeug 1 übermittelt werden. Weiterhin kann der Signalbegriff im DMI 2 über den gesamten Gültigkeitszeitraum bzw. den relevanten Streckenabschnitt angezeigt werden. Eine Anzeige solcher Signalbegriffe bzw. Informationen im Frontsichtbild eines HUD ist dabei besonders vorteilhaft und ergonomisch.

FIG.2 zeigt schematisch einen Führerstand mit dem DMI 2 aus Sicht des Fahrers. Das DMI 2 hat nebst typischen Bedienelementen (nicht näher gezeigt), wie Fahr-/Bremsschalter, Stromabnehmer-Hebe, Führerbremsventil, Türschalter, SiFa-Fußtaster, Makrofon-Taste usw., auch mehrere Displays, z.B. konventionelle TFT Anzeigen 2A, 2B, 2C. In den Anzeigen 2A, 2B, 2C können z.B. (v.l.n.r.) das Bedienfeld Maschinentechnik, die eigentliche Fahrtanzeige mit den ECTS-DMI-Anzeigen bzw. Bereichen, und ein elektronischer Fahrplan (z.B. EBuLa: "Elektronische Buchfahrplan und Langsamfahrstellen") angezeigt werden.

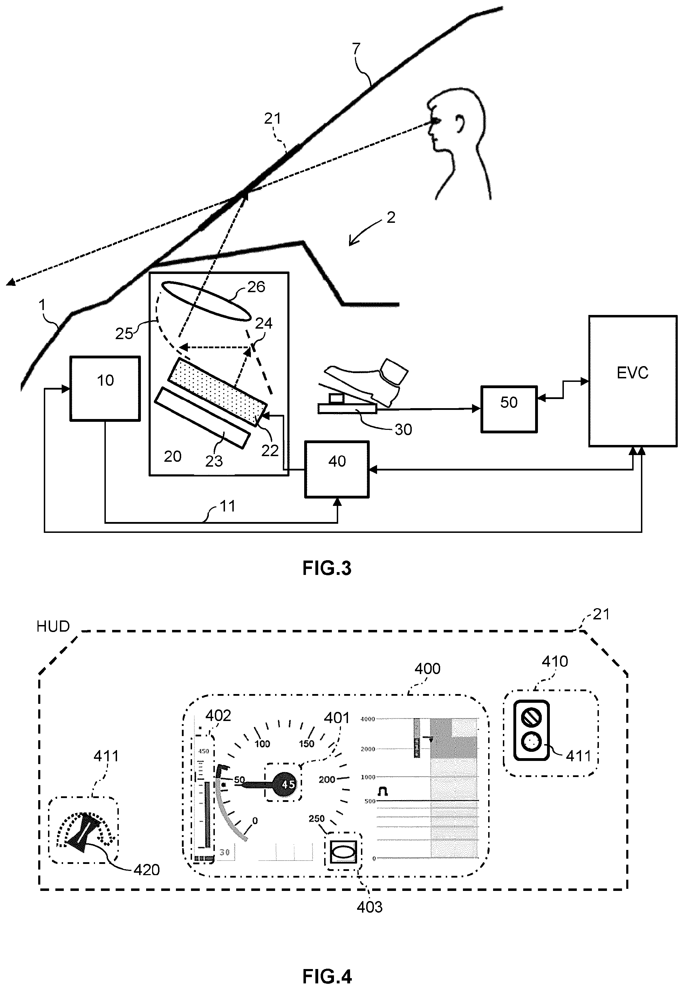

Weiterhin zeigt FIG.2 schematisch ein Frontsichtbild 21, das auf einer durchsichtigen Anzeigefläche, hier z.B. unmittelbar auf der Frontscheibe erzeugt wird. Das Frontsichtbild 21 wird durch eine HUD-Einheit 20 (vgl. FIG.3) erzeugt zwecks Anzeigen von Information innerhalb des Sichtfelds durch eine Frontscheibe 7 des Triebfahrzeugs 1 auf das Gleis 8, wie in FIG.2 veranschaulicht. Die HUD-Einheit 20 kann integrierter Bestandteil des DMI 2 bei Erstauslieferung sein, oder ggf. auch nachgerüstet werden.

Das DMI 2 bzw. System in FIG.3 umfasst eine Anzeigeeinrichtung mit einer bildgebenden HUD-Einheit 20. Diese erzeugt das Frontsichtbild, hier z.B. unmittelbar auf der Frontscheibe 7, zwecks Anzeigen von Information innerhalb des Sichtfelds des Fahrzeugführers (vgl. gestrichelte Linien) durch die Frontscheibe 7.

Ein darstellender Rechner 10, z.B. gängiger COTS-Bauart, generiert hierzu grafische Bilddaten in geeignetem Format, welche mindestens eine sicherheitsrelevante Information im Frontsichtbild anzeigen, die von einem fahrtrelevanten Parameter abhängt, z.B. der Fahrgeschwindigkeit. Die sicherheitsrelevante Information wird dem Rechner 10 von einem Sicherheitsrechner, hier z.B. dem EVC, übermittelt. Der Rechner 10 ist über eine HUD-Bilddatenleitung 11 mit der HUD-Einheit 20 verbunden und in an sich beliebiger Weise zur gewünschten Grafikanzeige anhand der HUD-Einheit 20 programmiert.

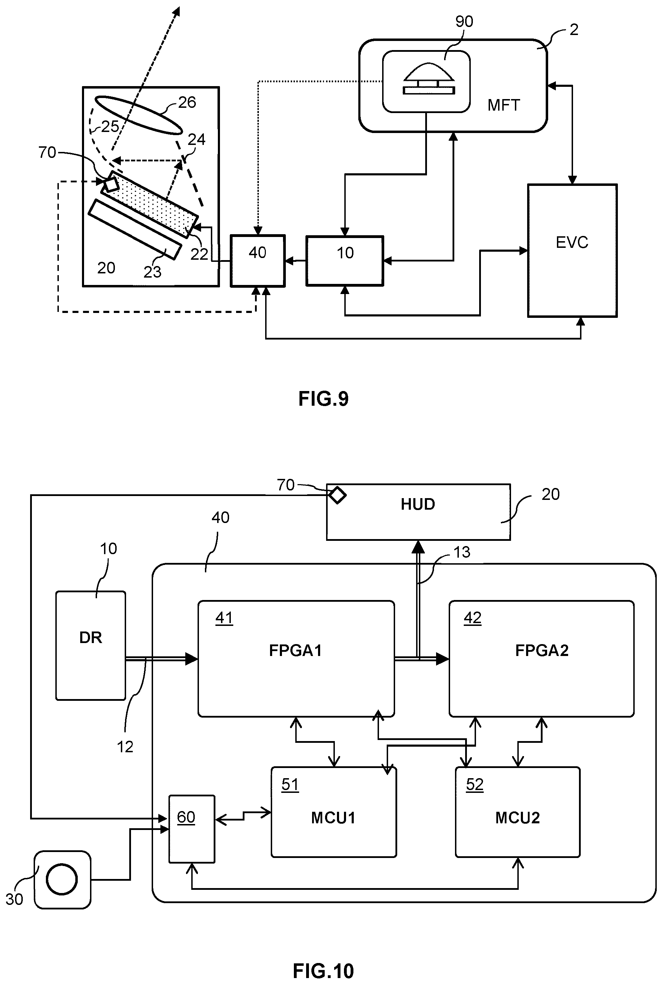

Der Bilddatenstrom zur HUD-Einheit 20 wird durch eine Prüfeinheit 40 geleitet (seriell) bzw. von dieser ausgelesen (parallel). Die Prüfeinheit 40 umfasst eine oder mehrere rechentechnische Komponenten z.B. FPGAs (vgl. FIG.10). Der Prüfeinheit 40 werden vom EVC auch entsprechende Parameter zugeführt, deren inhaltlich korrekte Darstellung in den Bilddaten zu prüfen sind. Die Prüfeinheit 40 ist hierzu direkt oder indirekt, ggf. auch über einen Rechner des DMI 2 oder über einen sicheren Kommunikationskanal durch den Rechner 10 (nicht gezeigt), mit dem EVC verbunden. Die Prüfeinheit 40 ist konfiguriert, um einen sicherheitsgerichteten Vergleich auf Basis zugeführter Bilddaten und Parameter durchzuführen, zwecks Überprüfung der Bilddaten. Hierzu kann bspw. das Prinzip aus WO 2011/003872 A1 bzw. EP 2 353 089 B1 der Anmelderin eingesetzt werden.

Das DMI 2 in FIG.3 ermöglicht in Kombination die Realisierung des ersten und zweiten o.g. Aspekts. Auf ein entsprechendes Signal, z.B. generiert durch den EVC, erzeugt der darstellende Rechner 10 zur Realisierung einer Wachsamkeits-Aufforderung nach dem Aufforderungsprinzip zeit- und/oder wegabhängig, insbesondere in zufälligen Zeit- und/oder Wegintervallen, ein zweckbestimmt sicherheitsgerichtetes grafisches Sicherheitsmerkmal, das im Bilddatenstrom über die HUD-Bilddatenleitung 11 und die Prüfeinheit 40 an die HUD-Einheit 20 übertragen wird.

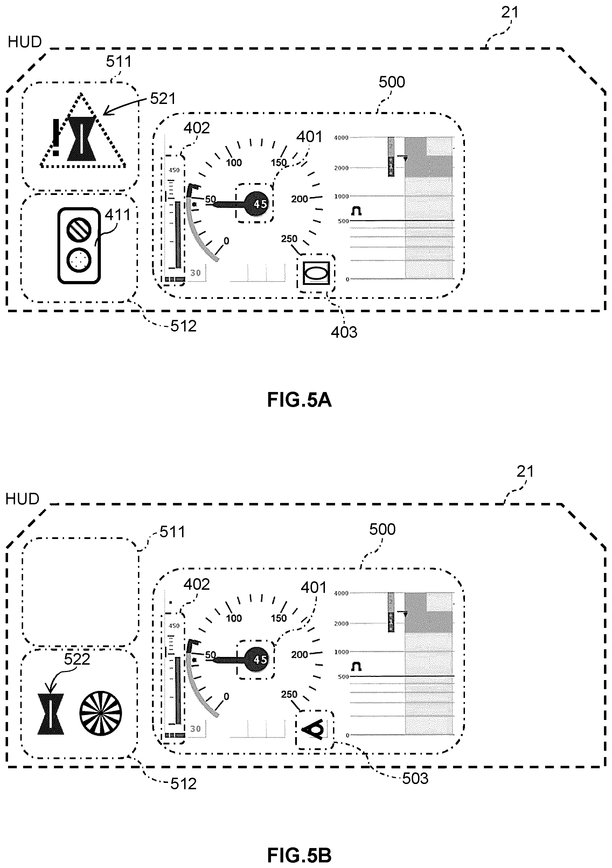

Das Sicherheitsmerkmal hat eine vorbestimmte grafische Darstellung, die den Fahrer bekannt ist (aus Bedienungsanweisung) und wird als Wachsamkeits-Aufforderung anhand der HUD-Einheit 20 eingeblendet. Das Sicherheitsmerkmal ist dem Fahrzeugführer als Wachsamkeits-Aufforderung bekannt (vgl. FIG.5A) und wird visuell für ihn im Sichtfeld auf die Strecke bzw. das Gleis 8 erkennbar.

Die Prüfeinheit 40 prüft auf korrekte grafische Darstellung des Sicherheitsmerkmals in den Bilddaten und löst bei entsprechender Feststellung einen Timer aus. Die Prüfeinheit 10 ist ferner konfiguriert, um an einem Fusspedal 30 (z.B. dem üblichen SiFA-Fußschalter), eine fahrergetätigte Bestätigung hinsichtlich einer erfolgten Anzeige des Sicherheitsmerkmals durch die HUD-Einheit 20 im Frontsichtbild 21 zu überwachen. Die Prüfeinheit 40 überwacht dabei in Reaktion auf die erkannte Darstellung des Sicherheitsmerkmals, eine Quittierung durch den Fahrzeugführer anhand des Fußpedals 30. Das Fußpedal 30 kann als Eingabegerät - ggf. mittels einer Sicherheitsfahrschaltung - z.B. mit dem EVC, und signaltechnisch auch mit der Prüfeinheit 40 verbunden sein. Der Fahrzeugführer bestätigt, im Rahmen einer Sicherheitsfahrschaltung nach dem Aufforderungsprinzip, inhärent die erkannte visuelle Anzeige des Sicherheitsmerkmals im Frontsichtbild 21.

Sofern innerhalb eines vorbestimmten ersten Zeitfensters ausgehend vom Timer der Prüfeinheit 40 die Bestätigung erfolgt, kann zugleich sicher auf Sichtbarkeit des von der HUD-Einheit 20 generierten Fronsichtbilds 21 rückgeschlossen werden. So kann in der Prüfeinheit 40 ein entsprechend positives Prüfergebnis bzgl. der erfolgten Anzeige ermittelt werden. Der EVC Rechner oder eine daran angeschlossene weitere Komponente 50 einer Fahrsicherheitsschaltung (nicht gezeigt), welche(r) vorzugsweise die Anzeige des Sicherheitsmerkmals initiiert hat, überwacht ebenfalls die Quittierung durch den Fahrzeugführer innerhalb eines entsprechenden Zeitfensters. Sofern diese rechtzeitig erfolgt, ist die Wachsamkeitsprüfung als erfolgreich zu werten. Andernfalls löst der EVC bei Überschreitung des ersten Zeitfensters ein akustisches Aufforderungs- bzw. Warnsignal aus. Unterbleibt dann die Quittierung weiterhin über ein zweites Zeitfenster hinaus, löst der EVC eine Notbremsung aus. Die Prüfeinheit 40 kann ggf. Anstelle der Komponente 50 zur Realisierung der Fahrsicherheitsschaltung genutzt werden.

Mit einer Einrichtung gemäß FIG.3 kann mit der Prüfeinheit 40 die korrekte Darstellung und Sichtbarkeit des gewünschten Bildinhalts im Frontsichtbild geprüft und sichergestellt werden, unter gleichzeitiger Realisierung einer besonders ergonomischen Wachsamkeitsprüfung mit grafischer Aufforderung am Frontsichtbild 21 des HUD.

FIG.3 zeigt weiterhin schematisch eine bevorzugte, robuste Bauweise der HUD-Einheit 20. Dies hat als bildgebende Einheit einen transparenten Flüssigkristallbildschirm 22, vom hier z.B. vom LCD-TFT Typ zur Erzeugung von Pixelgrafik mit einer Auflösung von z.B. 800 x 480 Pixeln oder größer, der über die Bilddatenleitung 11 vom Rechner 10 angesteuert wird. Der Flüssigkristallbildschirm 22 wird von einem Unterlicht 23 mit hoher Lichtleistung, z.B. ≥ 10,000 cd/m2 durchleuchtet (LCD). Bildschirm 22 und Unterlicht 23 bilden die bildgebende Einheit (PGU). Die HUD-Einheit 20 hat ferner eine Projektionsoptik mit Spiegeln 24, 25 zur Erzeugung des gewünschten Frontsichtbildes 21. Hierbei kann z.B. der Spiegel 25 einstellbar, z.B. ein asphärischer drehbar montierter Spiegel, sein, zur wahlweisen Positionierung und/oder Entzerrung (warping) des Frontsichtbildes 21 in das gewünschte Blickfeld auf der Fronstscheibe 7. Die Projektionsoptik kann eine Linse 26 und weitere übliche Bestandteile umfassen, die hier nicht gezeigt sind. Ebenfalls im Rahmen der Erfindung liegt eine HUD-Einheit 20 mit eigenem, insbesondere einstellbarem Combiner, auf welchem das Frontsichtbild 21 erzeugt wird. Die Erfindung ist grundsätzlich mit jeder HUD-Bauart realisierbar, z.B. auch mit einem transparenten OLED-HUD, LCD-TFT ist jedoch als besonders robust bevorzugt. Die HUD-Einheit 20 sollte Farbgrafik anzeigen können, und vorzugsweise mit Farbgrafik angesteuert werden, welche mit der Darstellung der Fahrtanzeige im DMI 2 (Display 2B) übereinstimmt.

FIG.4 und FIG.5A-5B zeigen rein beispielhaft Momentaufnahmen möglicher Frontsichtbilder 21 mit sicherheitsrelevanter Information. In einem zentralen Bildbereich 400 bzw. 500 des Frontsichtbilds 21 wird eine Auswahl typischer (ETCS-)DMI-Anzeigen zur eigentlichen Fahrtanzeige dargestellt, u.a. die aktuelle Fahrgeschwindigkeit in Form einer analogen Tachometeranzeige. Ein ausgewählter, repräsentativer erster Überwachungsbereich 401 der Tachometeranzeige wird durch die Prüfeinheit 40 überwacht. Ebenfalls überwacht wird im Überwachungsbereich 402 z.B. die Bremskurve oder dgl. In einem drittem Überwachungsbereich 403 überwacht die Prüfeinheit 40 die aktuelle ETCS-Betriebsart (Mode). Entsprechend erhält die Prüfeinheit 40 Eingangsparameter vom EVC und/oder einem Rechner im DMI 2. Die Überwachungsbereiche 401, 402, 403 sind hier nur beispielhaft veranschaulicht und werden anforderungsgemäß gewählt und konfiguriert durch Programmierung der Prüfeinheit 40.

In einem weiteren Bildbereich 410 wird ein virtuelles Streckensignal 411 angezeigt, das ebenfalls durch die Prüfeinheit 40 auf korrekte Darstellung überwacht wird.

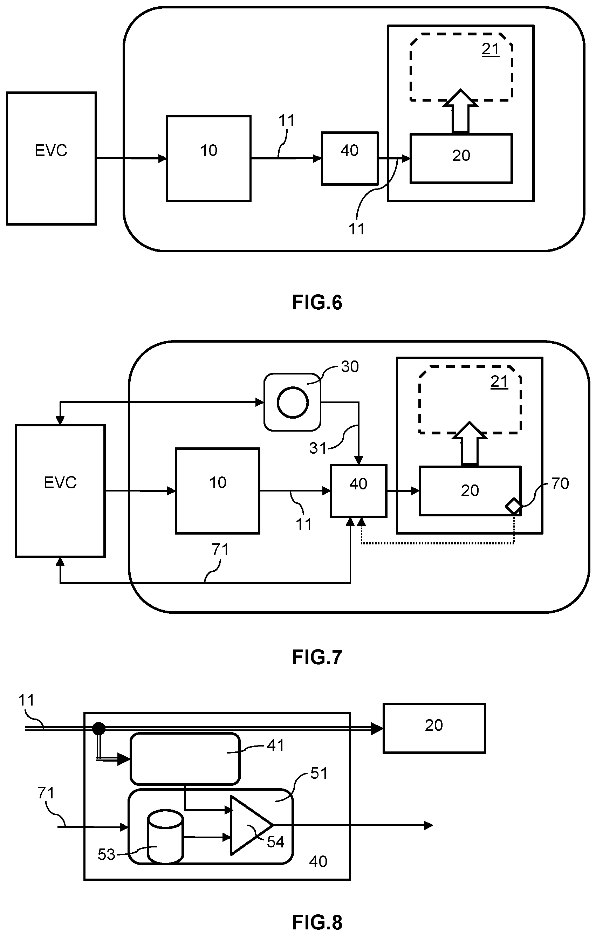

Als weiteres relevantes grafisches Merkmal im Frontsichtbild 21 zeigt FIG.4 beispielhaft ein sicherheitsgerichtetes Sicherheitsmerkmal 420, das in einem getrennten Bildbereich 411 visuell und nutzersichtbar angezeigt wird. Dies ist grafisch stets von jeglicher anderen Symbolik oder Information im Frontsichtbild unterscheidbar gewählt. Im Beispiel auf FIG.4, wird das Sicherheitsmerkmal 420 dynamisch, z.B. als drehendes Symbol dargestellt, das z.B. abhängig von der aktuellen Fahrgeschwindigkeit dreht. Das Sicherheitsmerkmal 420 erlaub dem Fahrer zu erkennen, dass das HUD bzw. die HUD-Einheit 20 ordnungsgemäß funktioniert und er sich auf die Bildinhalte, insbesondere im zentralen Bildbereich 400 und im Bildbereich 410 verlassen kann. Dies wiederum wird durch die Prüfeinheit 40, z.B. in einer Anordnung aus FIG.6 gewährleistet, indem diese auf bestimmungsgemäß korrekte Darstellung des Sicherheitsmerkmals 420 prüft. Die hierzu erforderliche Information, nämlich Kenntnis der grafischen Form, und ggf. die aktuelle Geschwindigkeit, liegt in der Prüfeinheit 40 durch geeignete Initial-Konfiguration vor, sodass die Prüfung des Bildbereichs 411 analog zur Prüfung der Überwachungsbereiche 401, 402, 403, 410 erfolgen kann.

Grundsätzlich kann ein HUD Informationsgehalt zweier Arten oder Klassen anzeigen, nämlich Information der Klasse Symbolik (Fahrzeuginformationen, Symbole, die typischerweise traditionelle Instrumente nachbilden oder deren Informationsgehalt wiedergeben, alphanumerische Zeichen, usw.) und der Klasse bildhafter Information. Symbolik kann unterteilt werden in feste Symbolik, wie z.B. typisch bei Geschwindigkeitsinformationen, die stets an vordefinierter Stelle auf dem Display angezeigt wird, und "konforme" Symbolik, die so dynamisch angeordnet, sodass sie ergonomisch soz. als virtuelle Realität der vorausliegenden Sicht im Blickfeld überlagert werden. Mit einem HUD kann die Anzeige von Streckensignalen konform und fest erfolgen, insbesondere zunächst streckenkonform (in virtueller Nachbildung eines Streckensignals), z.B. eines Geschwindigkeits-Gebotsschildes und anschließend ggf. als feste Symbolik, z.B. als weiterhin geltende Geschwindigkeitsbegrenzung der Strecke. Feste Symbolik wird bevorzugt in einem hierfür reservierten Bereich (wie bei einer Instrumentenabbildung) im Frontsichtbild angezeigt. Weiterhin ermöglicht ein HUD nebst der Wiedergabe von Symbolik auch das Anzeigen bildlicher oder bildhafter Information, z.B. zur aktuellen Wiedergabe aus der Umwelt, z.B. einer Rückfahrkamera oder einer Wärmebildkamera bei Nachtfahrten, oder Kollisionsfrühwarnungen, z.B. anhand geeigneter zugseitiger Sensoren. Entscheidender Vorteil des HUD ist, dass der Fahrzeugführer derartige Information unmittelbar im Frontsichtbild wahrnehmen kann, ohne den Blick von der Strecke abwenden zu müssen. Nicht ausschließlich, aber insbesondere bei Symbolik, insbesondere fest angezeigter Symbolik mit sicherheitsrelevantem Inhalt ist eine zuverlässig korrekte und sichtbare Anzeige durch das HUD von entscheidender Bedeutung.

Die Anzeigeeinrichtung sollte mittels der HUD-Einheit 20 im Frontsichtbild 21 zumindest die wichtigsten Informationen anzeigen, insbesondere aktuelle Geschwindigkeit, Fahrplanung bzw. Bremskurven, sowie ETCS-Modus und ggf. ECTS-Level. Dies ist typisch feste Symbolik und kann von der Prüfeinheit 40 in geeigneter Weise überprüft werden. Dementsprechend gehört das sicherheitsgerichtete Sicherheitsmerkmal 420 bevorzugt ebenfalls bevorzugt zur Klasse fester Symbolik.

FIG.5A veranschaulicht beispielhaft eine Variante mit einem ersten Sicherheitsmerkmal 521, in einem separaten und durch die Prüfeinheit 40 überwachten Bildbereich 511. Das Sicherheitsmerkmal 521 wird bedarfsweise nur kurz als Wachsamkeitsaufforderung eingeblendet und ist, z.B. mittels eines Systems wie in FIG.3 veranschaulicht, durch den Fahrzeugführer zu bestätigen. Die Wachsamkeitsaufforderung kann z.B. an das Aufzeigen bzw. Einblenden eines neuen oder anderen Streckensignals 411 in einem überwachten weiteren Bildbereich 512 gekoppelt sein, sodass inhärent die Aufmerksamkeit des Fahrzeugführers auch hierauf gelenkt wird.

Ergänzend oder alternativ kann die Einblendung eines grafischen Sicherheitsmerkmals 521 als Wachsamkeitsaufforderung auch an einen Übergang in einen anderen Fahrmodus gekoppelt sein, z.B. in einen manuellen Fahrmodus auf Sicht, z.B. ohne gültige Streckensignale, wie in FIG.5B veranschaulicht (Übergang von FIG.5A auf FIG.5B). In FIG.5 wird z.B. ein statisches Sicherheitsmerkmal 522 während der Dauer eines Symbols zur Anzeige eines nicht ECTS-überwachten Fahrmodus, wie im Überwachungsbereich 503 dargestellt, eingeblendet

Umgekehrt kann das Sicherheitsmerkmal 521 auch als Wachsamkeitsaufforderung und zugleich Warnung auf ein herannahendes kritisches Signal (Übergang von FIG.5B auf FIG.5A) angezeigt werden. Die Verwendung der HUD-Einheit 20 zur grafischen Anzeige einer Wachsamkeitsaufforderung bzw. eines grafischen Sicherheitsmerkmals 521 bietet eine Vielzahl vorteilhafter Möglichkeiten, welche die Sicherheit steigern. Auf die konkrete Gestaltung der Grafiken bzw. Symbolik kommt es dabei nicht an, diese kann aber insbesondere im Bildbereich 400, 500 ECTS-konform sein bzw. einer Normierung entsprechen.

FIG.6 zeigt eine Variante, bei welcher die Prüfeinheit 40 vorgesehen ist, die Bilddaten der Bilddatenleitung 11 lediglich auf eine korrekte Darstellung des Sicherheitsmerkmals 420, z.B. gemäß Fig.4 zu prüfen, ohne dass eine Rückkopplung durch Bestätigung, z.B. durch den Fahrzeugführer vorgesehen ist. Sofern der Fahrzeugführer angewiesen ist, sich auf das Frontsichtbild nur zu verlassen, wenn das Sicherheitsmerkmals 420 erwartungsgemäß, ggf. auch dynamisch, angezeigt wird, kann damit bereits in besonders einfacher Ausführungsform ein zuverlässig sicheres HUD realisiert werden. Das Sicherheitsmerkmal 420 kann dabei gemeinsam mit den sonstigen Bildinhalten durch den darstellenden Rechner 10 generiert werden, und pixelformatiert mit diesen der HUD-Einheit 20 zugeführt werden.

FIG.7 zeigt eine Weiterbildung bzw. Variante des Systems aus FIG.3, mit einer Rückkopplung eines Eingabegeräts 30 an die Prüfeinheit 40, hier direkt über eine Schnittstelle bzw. Leitung 31 an einer Schnittstelle der Prüfeinheit 40 angeschlossen. Das Eingabegerät 30 dient insbesondere zur Überwachung einer Quittierung eines nur zeitweise angezeigten Sicherheitsmerkmals 521, z.B. wie in FIG.5A, durch den Fahrer. Hierdurch wird überprüft, dass das Frontsichtbild 21 sichtbar angezeigt wird.

Weiterhin ist in FIG.7 schematisch ein optoelektronischer Sensor 70 gezeigt, der an einer oder mehreren Pixelzellen des LCD 22 (vgl. FIG.3), vorzugsweise in einem Randbereich, vorgesehen ist. Der Sensor 70 ist mit der Prüfeinheit 40 verbunden und erlaubt es dieser anhand des optoelektronischen Sensors 70 die ordnungsgemäße Funktion der Pixelzelle(n) des LCD 22 zu überwachen. Hierbei kann insbesondere die Prüfeinheit 40 selbst in vorbestimmter Weise die Pixelzelle(n) durch Veränderung des Bilddatenstroms ansteuern, und auf erwartetes Verhalten prüfen. Dies erlaubt u.a. sicherzustellen, dass das LCD bzw. die HUD-Einheit 20 nicht rechentechnisch eingefroren ist bzw. durch Softwarefehler im Rechner 10 oder Softwarefehler oder Hardwarefehler in der HUD-Einheit 20 nicht mehr reagiert. Anhand eines derartigen Sensors unmittelbar am LCD kann auch eine vollautomatische Rückkopplung zur Überwachung eines Sicherheitsmerkmals realisiert werden (ggf. ohne Eingabegerät 30).

Weiterhin zeigt FIG.7 eine optionale direkte Leitung 71 als sicheren Kanal zwischen der Prüfeinheit 40 mit dem EVC. Dieser kann alternativ, vgl. FIG.6, auch über einen logischen, sicheren Kanal durch Kommunikation zwischen EVC und Prüfeinheit 40 über den Rechner 10 realisiert sein.

FIG.8 zeigt schematisch eine mögliche Architektur der Prüfeinheit 40, mit die einem Prüfcode-Generator, z.B. einem ersten FPGA 41, sowie einer weiteren rechentechnischen Komponente, z.B. einem Mikrocontroller 51, der einen Referenzwertspeicher 53 aufweist und einen Vergleicher 54 implementiert. Die rechentechnischen Komponente 41, 51 implementieren eine Sicherheitsfunktion zur Prüfung von Bilddaten. Hierzu liest der FPGA bzw. Prüfcode-Generator 41 zu den vorbestimmten Überwachungsbereichen, vgl. FIG.4-5, zumindest Teile der Bilddaten über eine Bilddatenschnittstelle aus der Bilddatenleitung 11 aus und errechnet jeweilige Prüfcodes, z.B. Hash-Werte, CRC-Prüfsummen oder dgl. Der Mikrocontroller ordnet den jeweiligen Eingangsparametern, die z.B. über den sicheren Kanal 71 zugeführt werden, entsprechende vorgespeicherte Referenzcodes aus dem Referenzwertspeicher 53 zu. Diese werden dann jeweils in Parallelverarbeitung mit den Prüfcodes durch den Vergleicher 54 verglichen auf Übereinstimmung. FPGA 41 und Mikrocontroller 51 verarbeiten ggf. parallel mehrere Überwachungsbereiche (es ist hier schematisch nur ein Vergleicher dargestellt). Bei Nichtübereinstimmung ist die grafische Darstellung fehlerhaft und die Prüfeinheit löst, z.B. über den Kanal 71 oder einen Ausgang 72 eine sicherheitsgerichtete Reaktion aus und/oder blendet fehlerhafte Bildinformation im Bilddatenstrom aus und/oder blendet das Sicherheitsmerkmal 420 aus und anstelle dessen eine Fehlermeldung ein oder dgl.

Die Prüfeinheit 40 ist in allen Ausführungsformen bevorzugt ein separates Hardware-Modul, das insbesondere getrennt vom darstellenden Rechner 10 und vom EVC ausgeführt ist. Es kann am Bilddateneingang der HUD-Einheit 20 vorgesehen sein und ggf. in diese integriert werden.

FIG.9 zeigt eine Abwandlung zu FIG.3, mit einem optischen Sensor 70 analog zu FIG.7 am LCD 22 der HUD-Einheit, zur Realisierung einer Rückkopplung und Prüfung der Verfügbarkeit des LCD 22 durch die Prüfeinheit 40. Weiterhin zeigt FIG.9 als Variante zu FIG.3 einen Taster 90 an einem Multifunktionsterminal MFT des DMI 2, der zur Quittierung einer Anzeige des Sicherheitsmerkmals 521, z.B. wie in FIG.5 bestimmt ist. Hierzu kann das MFT bzw. DMI 2 signaltechnisch unmittelbar mit dem darstellenden Rechner 10 und/oder der Prüfeinheit 40 verbunden sein. Gegebenenfalls, kann die Bilderzeugung durch den Rechner 10 auch z.T. oder vollständig durch einen weiteren Rechner im DMI 2 gesteuert bzw. vorgegeben werden. Eine Kommunikation des Rechners 10 mit dem DMI 2 erlaubt ggf. eine Umschaltung der Anzeigen 2A, 2B, 2C in Abhängigkeit der Verfügbarkeit der HUD-Einheit 20 und/oder eine nutzerwählbare Einstellung unterschiedlicher Anzeigemodi an der HUD-Einheit 20, z.B. durch einen Wahlschalter an einem Bedienelement im DMI 2, z.B. am Fahr-/Bremsschalter. Entsprechend ist dann vorzugsweise das DMI 2 auch mit der Prüfeinheit verbunden.

FIG.10 zeigt eine weitere bevorzugte Architektur einer Prüfeinheit 40 mit einer zweistufigen Implementierung mit zwei FPGA 41, 42 zur Prüfcode-Erzeugung und einer der Voter-Anordnung mit zwei getrennten Mikrocontrollern bzw. Prozessoren 51, 52. Die Prozessoren 51, 52 implementieren jeweils doppelt und unabhängig alle relevanten Steuerungs- und Überprüfungsfunktionen wie vorstehend zu FIG.8 beschrieben. Die Prozessoren 51, 52 bilden einen 2-out-of-2-Voter, mit den FPGAs 41, 42 als zu prüfenden Gebern. Beide Prozessoren 51, 52 sind dazu signaltechnisch jeweils mit beiden FPGAs 41, 42 verbunden und überprüfen jeweils gegenseitig und unabhängig auf bestimmungsgemäß bzw. korrekte Funktion (Zweikanal-Prinzip). Eine externe Schnittstelle 60 ist zum Verbinden mit dem Eingabegerät 30, ggf. dem EVC und/oder einem optischen Sensor 70 in der HUD-Einheit 20 vorgesehen. Die Schnittstelle 60 kann getrennte ausgeführt oder in einem der Prozessoren 51, 52 integriert sein. Zu überwachende Eingabeparameter können der Prüfeinheit bzw. dem Überwachungsmodul 40 über die Schnittstelle 60 vom EVC (nicht dargestellt) zugeführt werden. Die Bilddatenleitung 11 ist in FIG.10 eingangsseitig mit dem Bilddateneingang 12 und ausgangsseitig mit dem Bilddatenausgang 13 verbunden.

Der FPGA 41 erzeugt Prüfcodes zu einem oder mehreren grafikbezogenen, vordefinierten Überwachungsbereichen für sicherheitskritische Anzeigen. Prüfcodes werden jeweils durch beiden FPGAs 41 bzw. 42 unabhängig ermittelt und in den zweikanalig implementierten Prozessoren 51, 52 jeweils unabhängig mit einem vorbestimmten Referenzwert entsprechend dem Eingabeparameter verglichen, der als Referenzwert zum jeweiligen Eingabeparameter z.B. bei einer Konfiguration vorgespeichert wurde. Der Referenzwert für den Vergleich kann als Referenzcode ausgehend von einem Eingabeparameter bestimmt werden, z.B. anhand einer Lookup-Tabelle, oder es erfolgt ein Vergleich des aktuellen Eingabeparameters mit einem aus dem ermittelten Code zurückgewonnenen Referenzparameter, z.B. per Lookup-Tabelle.

Der zweite FPGA 42 ist hier mit der Bilddatenleitung 11 ausschließlich über einen Eingang verbunden (nur-Lese-Verbindung), d.h. kann die Bilddaten nicht verändern, während der vorgeschaltete erste FPGA 41 die Bilddaten liest (z.B. als LVDS-Empfänger) und ggf. verändert weitergeben kann (z.B. als LVDS-Sender). Mit dieser Architektur nach FIG.10 können mehrere sicherheitstechnisch vorteilhafte Funktionen implementiert werden, die höhere Sicherheitsstufen erlauben, z.B. SIL-3 oder höher.

Insbesondere kann eine sicherheitsgerichtete visuelle Einblendung des Sicherheitsmerkmals, z.B. 420, durch das FPGA 41 per Bilddatenmodifikation, insbesondere durch Pixelveränderung der Bilddaten am Ausgang des FPGA 41, erfolgen. Diese Einblendung kann durch den zweiten FPGA 42 zuverlässig überprüft werden. Der FPGA 42 überprüft hierbei die erwartete grafische Darstellung des Sicherheitsmerkmals im Bilddatenstrom, welche der FPGA 41 erwartungsgemäß an seinem Ausgang in den Bilddaten erzeugen soll, mit einer entsprechend erwarteten Darstellung, z.B. anhand des Prüfcode-Verfahrens, durch Generieren eines Prüfcodes für die grafische Darstellung. Die grafische Erzeugung des Sicherheitsmerkmals kann somit durch den FPGA 42 überprüft werden.

Weiterhin erfolgt anhand der Prüfcodes aus beiden FPGAs 41, 42 eine zweikanalige Prüfung der vorbestimmten Überwachungsbereiche mit einem entsprechenden Sollwert bzw. Sollcode. Der hierfür nötige Vergleich erfolgt wiederum zweikanalig und unabhängig in beiden Prozessoren 51, 52 zur Erhöhung der Sicherheit.

Ergänzend bzw. alternativ kann auch, zur Erhöhung der Bediensicherheit eine visuelle Hervorhebung sicherheitsrelevanter, hinsichtlich korrekter Darstellung überwachter Anzeigebereiche, welche der FPGA 41 durch Bilddatenmodifikation bestimmungsgemäß vornimmt, durch den zweiten FPGA 42 überprüft werden.

Die Auswertung der Quittierung bzw. Nutzereingabe am Eingabegerät 30 kann über die als Bestätigungseingang dienende Schnittstelle 60 anhand mindestens eines Prozessors 51, 52 erfolgen. Gegebenenfalls kann der andere Prozessor 51, 52 unabhängig und diversitär über den Sensor 70 auf korrekte Funktion der HUD-Einheit prüfen.

## Patentansprüche

1. Anzeigeeinrichtung für ein sicheres Führerstand-Frontsichtdisplay (20) eines Schienenfahrzeugs (1), umfassend:
- eine bildgebende Führerstand-Frontsichtdisplay-Einheit zur Erzeugung eines Frontsichtbildes auf einer durchsichtigen Anzeigefläche zwecks Anzeigen von Information innerhalb eines Sichtfelds durch eine Frontscheibe des Schienenfahrzeugs;
- einen darstellenden Rechner (10), welcher konfiguriert ist, Bilddaten zu generieren, wobei die Bilddaten solche Bilddaten umfassen, durch die mindestens eine sicherheitsrelevante Information in einem sicherheitsrelevanten Bildbereich des Frontsichtbildes anzeigbar ist und die mindestens eine sicherheitsrelevante Information von einem Parameter abhängt ;
- eine Bilddatenleitung (11), welche die bildgebende Führerstand-Frontsichtdisplay-Einheit mit dem darstellenden Rechner verbindet;
- eine Sicherheitsvorrichtung, welche mit der Bilddatenleitung verbunden ist;
**dadurch gekennzeichnet,**
- **dass** die Sicherheitsvorrichtung eine Prüfeinheit (40) aufweist, welche eine oder mehrere rechentechnische Komponenten umfasst, und konfiguriert ist, der Prüfeinheit zumindest diejenigen Bilddaten, durch die mindestens eine sicherheitsrelevante Information in dem sicherheitsrelevanten Bildbereich anzeigbar ist, sowie den entsprechenden Parameter zuzuführen und die Prüfeinheit konfiguriert ist, einen sicherheitsgerichteten Vergleich auf Basis der zugeführten Bilddaten und des zugeführten Parameters durchzuführen, derart dass die zugeführten Bilddaten und der zugeführte Parameter auf inhaltliche Übereinstimmung geprüft werden; und
- **dass** die Prüfeinheit konfiguriert ist,
zu prüfen, ob die zugeführten Bilddaten ein Sicherheitsmerkmal umfassen, und eine Bestätigung hinsichtlich einer erfolgten Anzeige des Sicherheitsmerkmals durch die Führerstand-Frontsichtdisplay-Einheit zu überwachen; **oder** den Bilddaten ein Sicherheitsmerkmal hinzuzufügen,
und eine Bestätigung hinsichtlich einer erfolgten Anzeige des Sicherheitsmerkmals durch die Führerstand-Frontsichtdisplay-Einheit zu überwachen.

2. Anzeigeeinrichtung nach Anspruch 1, **dadurch gekennzeichnet, dass** die Anzeigeeinrichtung konfiguriert ist, um ein Sicherheitsmerkmal in den der Führerstand-Frontsichtdisplay-Einheit zugeführten Bilddaten darzustellen, wobei das Sicherheitsmerkmal eine vorbestimmte sicherheitsgerichtete Bildgebung durch die Führerstand-Frontsichtdisplay-Einheit bewirkt, die es erlaubt, auf bestimmungsgemäße Funktion der Führerstand-Frontsichtdisplay-Einheit zu prüfen;
wobei insbesondere:
- der Prüfeinheit zumindest Bilddaten zugeführt werden bzw. zuführbar sind, welche dem Sicherheitsmerkmal entsprechen und die Prüfeinheit konfiguriert ist, um diese Bilddaten auf korrekte Darstellung des Sicherheitsmerkmals zu prüfen, und/oder die Prüfeinheit konfiguriert ist zum Einfügen des Sicherheitsmerkmals in die Bilddaten und Weiterleiten der so veränderten Bilddaten an die Führerstand-Frontsichtdisplay-Einheit; **und / oder**
- der Prüfeinheit eine Bestätigung hinsichtlich einer erfolgten Anzeige des Sicherheitsmerkmals durch die Führerstand-Frontsichtdisplay-Einheit zugeführt wird bzw. zuführbar ist, und die Prüfeinheit konfiguriert ist, eine entsprechende Bestätigung zu überwachen.

3. Anzeigeeinrichtung nach Anspruch 1 oder 2, **dadurch gekennzeichnet, dass**
- die Prüfeinheit konfiguriert ist zur Überprüfung auf korrekte Darstellung des Sicherheitsmerkmals durch den darstellenden Rechner in den Bilddaten; oder
- die Prüfeinheit konfiguriert ist zum Einfügen des Sicherheitsmerkmal, insbesondere zum Einfügen des Sicherheitsmerkmals durch Veränderung der vom darstellenden Rechner erzeugten Bilddaten und Weiterleiten der so veränderten Bilddaten an die Führerstand-Frontsichtdisplay-Einheit.

4. Anzeigeeinrichtung nach Anspruch 1, 2 oder 3, **dadurch gekennzeichnet, dass** die Prüfeinheit einen Bestätigungseingang, insbesondere eine digitale Schnittstelle, aufweist zum Empfang einer Bestätigung hinsichtlich einer Darstellung des Sicherheitsmerkmal in den Bilddaten.

5. Anzeigeeinrichtung nach Anspruch 4, **dadurch gekennzeichnet, dass** die Prüfeinheit konfiguriert ist zur Überprüfung auf visuelle Anzeige des Sicherheitsmerkmals, diese Überprüfung umfassend ein Überwachen einer Nutzereingabe durch den Fahrzeugführer als Bestätigung zur Quittierung einer erfolgten visuellen Anzeige des Sicherheitsmerkmal innerhalb eines vorbestimmten Zeitfensters, wobei der Bestätigungseingang vorzugsweise mit einem nutzerbedienbaren Eingabegerät verbunden ist.

6. **System** zur Wachsamkeitsüberwachung im Führerstand eines Schienenfahrzeugs, umfassend eine Anzeigeeinrichtung nach Anspruch 4 oder 5, **dadurch gekennzeichnet, dass**
- das System dazu eingerichtet ist, nach dem Aufforderungsprinzip ein bzw. das sicherheitsgerichtete Sicherheitsmerkmal als Wachsamkeits-Aufforderung anhand der Führerstand-Frontsichtdisplay-Einheit einzublenden;
- das System, insbesondere die Prüfeinheit, dazu eingerichtet ist, eine Quittierung durch den Fahrzeugführer auf eine erfolgte visuellen Anzeige des Sicherheitsmerkmals innerhalb eines vorbestimmten Zeitfensters, insbesondere anhand eines am Bestätigungseingang der Prüfeinheit angeschlossenen Eingabegeräts, insbesondere einer Sicherheitsfahrschaltung, zu überwachen und
- das System, insbesondere die Prüfeinheit, dazu eingerichtet ist, bei Ausbleiben der Quittierung, eine sicherheitsgerichtete Reaktion auszulösen;
wobei die Prüfeinheit vorzugsweise mit einer Sicherheitsfahrschaltung nach UIC 641 und/oder VDE 0119-207-5 zur Wachsamkeitsprüfung, insbesondere mit einem Handtaster oder Fußpedal der Sicherheitsfahrschaltung verbunden ist.

7. Anzeigeeinrichtung nach einem der Ansprüche 1 - 5, **dadurch gekennzeichnet, dass**
- die mindestens eine rechentechnische Komponente eine Sicherheitsfunktion implementiert und zumindest Teile der Bilddaten über eine Bilddatenschnittstelle ausliest;
- die Prüfeinheit als separates Hardware-Modul ausgeführt ist, insbesondere getrennt vom darstellenden Rechner und vom Sicherheitsrechner (EVC) ausgeführt ist, wobei die Prüfeinheit vorzugsweise eingangsseitig am Bilddateneingang der Führerstand-Frontsichtdisplay-Einheit vorgesehen ist;
und/oder
- die Prüfeinheit über einen sicheren Kanal mit einem übergeordneten sicheren Rechner (EVC) verbunden ist, welcher darzustellende Parameter an die Prüfeinheit übermittelt;
und/oder
- die Anzeigeeinrichtung Bestandteil eines Driver-Machine-Interface (DMI), insbesondere eines ETCS-fähigen DMI, ist, welches weiterhin ein Multifunktionsterminal mit mindestens einem DMI-Display umfasst und mindestens eine Eingabevorrichtung für Bedieneingaben aufweist, insbesondere ein Touch und/oder konfigurierbare Softkeys am DMI-Display, wobei die Eingabevorrichtung zur Quittierung einer Anzeige des sicherheitsgerichtete Sicherheitsmerkmal im Frontsichtbild mit der Prüfeinheit verbunden ist und Eingaben an die Prüfeinheit übermittelt.

8. Anzeigeeinrichtung nach einem der Ansprüche 1 - 5 oder 7, **dadurch gekennzeichnet, dass**
als bildgebende Führerstand-Frontsichtdisplay-Einheit ein Head-Up-Display (HUD) vom LCD-Typ, insbesondere LCD-TFT Typ, vorgesehen ist, wobei die Führerstand-Frontsichtdisplay-Einheit einen von einem Unterlicht durchleuchtbaren Flüssigkristallbildschirm (LCD), insbesondere einen TFT-LCD, welcher vom darstellenden Rechner angesteuert wird, sowie eine Projektionsoptik zur Erzeugung eines Frontsichtbildes aufweist, insbesondere eine bzgl. des Blickfelds einstellbare Projektionsoptik und/oder einen bzgl. des Blickfelds einstellbaren Combiner aufweist;
wobei vorzugsweise mindestens ein optoelektronischer Sensor an einer oder mehreren Pixelzellen, vorzugsweise in einem Randbereich, des Flüssigkristallbildschirms vorgesehen und mit der Prüfeinheit verbunden ist, um anhand des optoelektronischen Sensors den LCD zu überwachen.

9. Anzeigeeinrichtung nach einem der Ansprüche 1 - 5, 7 oder 8, **dadurch gekennzeichnet, dass**
- die Prüfeinheit eingerichtet ist, berechnete Prüfcodes, insbesondere durch die rechentechnische Komponente aus Bilddaten berechnete Prüfcodes, und einen zugeführten entsprechenden Parameter einem sicherheitsgerichteten Vergleich zuzuführen, und/oder
- dass die Prüfeinheit zumindest einen Prüfcode-Generator, einen Referenzwertspeicher und einen Vergleicher umfasst.

10. Anzeigeeinrichtung nach einem der Ansprüche 1 - 5 oder 7 - 9, **dadurch gekennzeichnet, dass**
die die Prüfeinheit eine zweistufige Architektur aufweist mit einer ersten Rechenkomponente, welche eingerichtet ist um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten für ein Display bereitzustellen, und mit einer zweiten Rechenkomponente, welche eingerichtet ist um von der ersten Rechenkomponente bereitgestellte Bilddaten zu überprüfen, durch Berechnung eines Prüfcodes für Bilddaten, welche zur Anzeige in dem vorbestimmten Bildbereich bestimmt sind;
wobei die erste Rechenkomponente vorzugsweise dazu eingerichtet ist, das Sicherheitsmerkmal durch Modifikation der eingangsseitig erhaltenen Bilddaten einzufügen, und die zweite Rechenkomponent dazu eingerichtet ist, diese Bilddaten-Modifikation überprüft zu überprüfen, insbesondere anhand eines Prüfcode-Vergleichs.

11. **Verfahren** zur sicheren Anzeige von Information mit einem Führerstand-Frontsichtdisplay (20) eines Schienenfahrzeugs, umfassend:
- Erzeugung eines Frontsichtbildes mittels einer Führerstand-Frontsichtdisplay-Einheit auf einer durchsichtigen Anzeigefläche zwecks Anzeigen von Information innerhalb eines Sichtfelds durch eine Frontscheibe des Schienenfahrzeugs (1),
wobei die Führerstand-Frontsichtdisplay-Einheit von einem darstellenden Rechner (10) über eine Bilddatenleitung angesteuert wird, welcher pixelformatierte Bilddaten generiert, die mindestens eine sicherheitsrelevante Information in einem sicherheitsrelevanten Bildbereich darstellen, welche von einem Parameter abhängen, vorzugsweise einem fahrtrelevanten Parameter, welcher von einem Sicherheitsrechner übermittelt wird;
**dadurch gekennzeichnet,**
- **dass** eine Prüfeinheit (40) mit der Bilddatenleitung (11) verbunden ist, welche eine oder mehrere rechentechnische Komponenten umfasst und zumindest einen Teil der Bilddaten vom darstellenden Rechner erhält, wobei der Prüfeinheit zumindest Bilddaten, welche dem sicherheitsrelevanten Bildbereich zugeordnet sind, sowie der entsprechende Parameter zugeführt werden und die Prüfeinheit, einen sicherheitsgerichteten Vergleich inhaltliche Korrektheit auf Basis zugeführter Bilddaten und Parameter durchführt; und
- **dass** ein vorbestimmtes Sicherheitsmerkmal in den der Führerstand-Frontsichtdisplay-Einheit zugeführten Bilddaten dargestellt wird, welches eine entsprechende und sicherheitsgerichtete Bildgebung durch die Führerstand-Frontsichtdisplay-Einheit bewirkt, um eine Prüfung auf bestimmungsgemäße Funktion der Führerstand-Frontsichtdisplay-Einheit zu ermöglichen;
mit den weiteren Schritten :
- die Prüfeinheit fügt das Sicherheitsmerkmal in die Bilddaten ein und leitet so veränderte Bilddaten an die Führerstand-Frontsichtdisplay-Einheit weiter; oder
- Zuführen von zumindest den Bilddaten, welche dem Sicherheitsmerkmal entsprechen, an die Prüfeinheit wobei die Prüfeinheit diese Bilddaten auf korrekte Darstellung des Sicherheitsmerkmals prüft;
- **und** die Prüfeinheit eine Bestätigung hinsichtlich einer erfolgten Anzeige des Sicherheitsmerkmals durch die Führerstand-Frontsichtdisplay-Einheit überwacht.

12. Verfahren nach Anspruch 11, **dadurch gekennzeichnet, dass**
- das sicherheitsgerichtete Sicherheitsmerkmal bestimmungsgemäß veränderlich bzw. variabel, insbesondere zeitvariabel und/oder positionsvariabel, in einem sichtbaren Bereich des Frontsichtbilds angezeigt wird; und/oder
- der darstellende Rechner mindestens zwei sicherheitsrelevante Informationen darstellt, wobei eine erste Information in einem ersten Bildbereich angezeigt wird und eine zweite Information in einem zweiten Bildbereich angezeigt wird, und die Prüfeinheit zwecks Prüfung unabhängig einen rechentechnischen Vergleich von Bilddaten zur ersten Information im ersten Bildbereich mit einem ersten entsprechenden Parameter vornimmt und einen rechentechnischen Vergleich von Bilddaten zur zweiten Information im zweiten Bildbereich mit einem zweiten entsprechenden Parameter vornimmt, und die Prüfeinheit bei negativem Prüfergebnis, die jeweils fehlerhafte Information ausblendet, überblendet und/oder als fehlerhaft markiert; wobei das sicherheitsgerichtete Sicherheitsmerkmal vorzugsweise neben den bzw. zusätzlich zu den mindestens zwei dauerhaft angezeigten sicherheitsrelevanten Informationen visuell angezeigt wird, insbesondere nur sporadisch angezeigt wird.

13. Verfahren nach einem der vorstehenden Ansprüche 11 oder 12, **dadurch gekennzeichnet, dass**
die mindestens eine sicherheitsrelevante Information
- mindestens eine Fahrtinformation, insbesondere eine überwachte Geschwindigkeit, Bremsinformation oder Gefahreninformation; und/oder
- mindestens eine TCMS-Information;
- mindestens ein virtuelles Streckensignal bzw. Symbol zur In-Cab-Signalisierung; und/oder
- mindestens ein ATP-Symbol, insbesondere ein ETCS-Betriebsartensymbol;
im Frontsichtbild darstellen.

14. Verfahren nach einem der vorstehenden Ansprüche 11 bis 13, **dadurch gekennzeichnet, dass**
die Prüfeinheit eine sicherheitsgerichtete Reaktion auslöst bei Ausbleiben der Bestätigung und/oder bei Negativergebnis des sicherheitsgerichteten Vergleichs.

15. Driver-Machine-Interface (2) insbesondere ETCS-fähiges Driver-Machine-Interface (2), für einen Führerstand eines Schienenfahrzeugs (1), **gekennzeichnet durch** eine Anzeigeeinrichtung nach einem der vorstehenden Ansprüche 1 - 5 oder 7 - 10.

## Claims

1. Display device for a safe driver's cab front view display (20) of a rail vehicle (1), comprising:
- an imaging driver's cab front view display unit for generating a front view image on a transparent display surface for the purpose of displaying information within the field of view through a windshield of the rail vehicle;
- a displaying computer (10) which is configured to generate image data, wherein the image data comprise such image data by which at least one safety-related information is displayable in a safety-related image area of the front view image and the at least one safety-related information depends on a parameter;
- an image data line (11) connecting the imaging driver's cab front view display unit to a displaying computer;
- a safety device which is connected to the image data line;
**characterized in**
- **that** the safety device includes a checking unit (40) which comprises one or more computational components and is configured to supply to the checking unit at least those image data by which the at least one safety-related information is displayable in the safety-related image area and to supply the corresponding parameter, the checking unit being configured to perform a safety-oriented comparison based on the image data which are supplied and on the parameter which is supplied, in such a way that the image data which are supplied and the parameter which is supplied are verified for content consistency; and
- **that** the examination unit is configured
to verify if the image data supplied include a safety feature and to monitor a confirmation regarding successful display of the safety feature by the driver's cab front view display unit;
**or**
to add a safety feature to the image data and to monitor a confirmation regarding successful display of the safety feature by the driver's cab front view display unit.

2. Display device according to claim 1, **characterized in that** the display device is configured to present a safety feature in the image data supplied to the driver's cab front view display unit, wherein the safety feature causes predetermined safety-related imaging by the driver's cab front view display unit which allows to check the driver's cab front view display unit for an intended function;
- wherein in particular:
the checking unit is or can be supplied at least with image data which correspond to the safety feature, and the checking unit is configured to verify these image data for correct presentation of the safety feature,
and/or the checking unit is configured to insert the safety feature into the image data and to forward the image data thus modified to the driver's cab front view display unit; **and/or**
- the checking unit is or can be supplied with confirmation regarding successful display of the safety feature by the driver's cab front view display unit, and the checking unit is configured to monitor a corresponding confirmation.

3. Display device according to claim 1 or 2, **characterized in that**
- the checking unit is configured for verifying the safety feature for correct presentation in the image data by the displaying computer; or
- the checking unit is configured to insert the safety feature, in particular to insert the safety feature by modifying the image data generated by the displaying computer and forwarding the image data thus modified to the driver's cab front view display unit.

4. Display device according to claim 1, 2 or 3,
**characterized in that** the checking unit comprises a confirmation input, in particular a digital interface, for receiving confirmation regarding presentation of the safety feature in the image data.

5. Display device according to claim 4, **characterized in that** the checking unit is configured to check the safety feature for visual display, this check comprising monitoring a user input by the driver as a confirmation of acknowledgement of a successful display of the safety feature within a predetermined time window, wherein the confirmation input is preferably connected to a user-operable input device.

6. **System** for vigilance monitoring in the driver's cab of a rail vehicle, comprising a display device according to claim 4 or 5, **characterized in that**
- the system is configured to show, according to the request principle, a or the safety-related safety feature as a vigilance request by means of the driver's cab front view display unit;
- the system, in particular the checking unit, is configured to monitor a driver's acknowledgement in response to a visual display of the safety feature within a predetermined time window, in particular by means of an input device, in particular a safety drive circuit, connected to the confirmation input of the checking unit, and
- the system, in particular the checking unit, is configured to trigger a safety-related reaction if no acknowledgement is received;
wherein the checking unit is preferably equipped with a safety drive circuit according to UIC 641 and/or VDE 0119-207-5 for vigilance checking, in particular by means of a press button or a pedal of the safety drive circuit.

7. Display device according to any of claims 1 to 5, **characterized in that**
- the at least one computational component implements a safety function and reads out at least part of the image data via an image data interface;
- the checking unit is in the form of a separate hardware module, in particular separate from the displaying computer and from the safety computer (EVC), wherein preferably the checking unit is provided on the imaged date input side of the driver's cab front view display unit;
and/or
- the checking unit is connected to a higher-level safe computer (EVC) via a safe channel, the higher-level safe computer (EVC) transmitting parameters to be displayed to the checking unit;
and/or
- the display device is a component part of driver-machine interface (DMI), in particular an ETCS-compatible DMI, which further comprises a multifunction terminal with at least one DMI display and at least one input device for user inputs, in particular a touch and/or configurable soft keys at the DMI display, wherein the input device, for acknowledging display of the safety-related safety feature in the front view image, is connected to the checking unit and transmits inputs to the checking unit.

8. Display device according to any of claims 1 to 5 or 7, **characterized in that**
a head-up display (HUD) of the LCD type, in particular the LCD-TFT type, is provided as an imaging driver's cab front view display unit, wherein the driver's cab front view display unit comprises a liquid crystal display (LCD) that can be illuminated from below, in particular a TFT-ICD, that is controlled by the displaying computer, as well as projection optics for generating a front view image, in particular projection optics that can be adjusted in terms of the field of view, and or a combiner that can be adjusted in terms of the field of view; wherein preferably at least one optoelectronic sensor is provided on one or more pixel cells, preferably in a border area, of the liquid crystal display and to the checking unit, in order to monitor the LCD by means of the optoelectronic sensor.

9. Display device according any of claims 1 to 5, 7 or 8, **characterized in that**
- the checking unit is configured to supply calculated check codes, in particular check codes calculated from image data using the computational component, and a corresponding parameter which has been supplied, to a safety-related comparison, and/or
- the checking unit comprises at least a check code generator, a reference value memory and a comparison tool.

10. Display device according to any of claims 1 to 5 or 7 to 9, **characterized in that** checking unit has a two-tier architecture with a first computing component that is configured to obtain input-side computer-generated image data and to modify at least a part of the image data, which are intended for being displayed in a predetermined image area, dependent on a safety-function, and also to provide output-side image data for a display device, and with a second computing component that is configured to check image data provided by the first computing component by calculating a check code for the image data which are intended for being displayed in the predetermined image area;
wherein preferably the first computing component is configured to insert the safety feature by modifying the image data received on the input side, and the second computing component is configured to check this image data modification, in particular by means of a check code comparison.

11. **Method** for safely displaying information by means of a driver's cab front view display (20) of a rail vehicle, comprising:
- generating a front view image by means of a driver's cab front view display unit on a transparent display surface for the purpose of displaying information within a field of view through a windscreen of the rail vehicle (1),
wherein the driver's cab front view display unit is controlled by a displaying computer (10) via a data image line, which displaying computer generates pixel-formatted image data which at least present one safety-related piece of information in a safety-related image area which depend on a parameter, preferably a travel-related parameter that is transmitted from a safety computer;
**characterized in**
- **that** a checking unit (40) is connected to the image data line (11), which checking unit comprises one or more computational components and receives at least a part of the image data from the displaying computer, wherein the checking unit is supplied at least with image data that are assigned to the safety-related image area and is supplied with corresponding parameters, and the checking unit performs a safety-related comparison of accuracy of content based on image data and parameters that are supplied; and
- **that** a predetermined safety feature is presented in the image data supplied to the driver's cabin front view display unit which causes corresponding and safety-related imaging by the driver's cabin front view display unit in order to allow the driver's cabin front view display unit to be checked for intended function;
the method further comprising the steps:
- the checking unit inserts the safety feature into the image data and forwards image data thus modified to the driver's cabin front view unit; **or**
- supplying at least the image data which correspond to the safety feature to the checking unit, wherein the checking unit checks these image data for accurate representation of the safety feature;
- **and** the checking unit monitors a confirmation regarding successful display of the safety feature by the driver's cabin front view display unit.

12. Method according to claim 11, **characterized in that**
- the safety-related safety feature is displayed in a visible area of the front view image in a changeable or variable, in particular time- and/or position-variable manner as intended; and/or
- the displaying computer presents at least two safety-related pieces of information, wherein a first piece of information is displayed in a first image area and a second piece of information is displayed in a second image area, and the checking unit for the purpose of checking performs a computational comparison of image data on the first piece of information in the first image area with a corresponding first parameter and performs a computational comparison of image data on the second piece of information in the second image area with a corresponding second parameter, and the checking unit, when the result of the check is negative, hides, fades out and/or marks as incorrect the respective incorrect information; wherein the safety-related safety feature is displayed visually, in particular only occasionally, besides or in addition to the at least two permanently displayed safety-related pieces of information.

13. Method according to any of the preceding claims 11 or 12, **characterized in that**
the at least one safety-related piece of information represents in the front view image
- at least travel information, in particular a monitored speed, braking information or hazard information; and/or
- at least one TCMS piece of information;
- at least one virtual track signal or symbol for in-cab signaling; and/or
- at least one ATP symbol, in particular an ETCS operating mode symbol.

14. Method according to any of the preceding claims 11 to 13, **characterized in that**
the checking unit triggers a safety-related reaction if no confirmation is received and/or if the result of the safety-related comparison is negative.

15. Driver-machine interface (2), in particular ETCS-compatible driver-machine interface (2), for a driver's cab of a rail vehicle (1), **characterized by** a display device according to any one of the preceding claims 1 to 5 or 7 to 10.

## Revendications

1. Dispositif d'affichage pour un écran de vue frontale sécurisé (20) dans la cabine du conducteur d'un véhicule ferroviaire (1), comprenant:
- une unité d'affichage d'images de vue frontale dans la cabine de conducteur pour générer une image de vue frontale sur une surface d'affichage transparente dans le but d'afficher des informations dans le champ de vision à travers le pare-brise du véhicule ferroviaire;
- un ordinateur d'affichage (10) qui est configuré pour générer des données d'image, les données d'image comprenant des données d'image grâce auxquelles au moins une information relative à la sécurité peut être affichée dans une zone d'image relative à la sécurité de l'image de vue frontale, et ladite au moins une information relative à la sécurité dépendant d'un paramètre;
- une ligne de données d'image (11) reliant l'unité d'affichage d'images de vue frontale dans la cabine de conducteur qui génère une image de vue frontale à l'ordinateur d'affichage;
- un dispositif de sécurité qui est connecté à la ligne de données d'image;
**caractérisé en ce**
- **que** le dispositif de sécurité comprend une unité de contrôle (40) qui comprend un ou plusieurs composants de calcul et est configurée pour fournir à l'unité de contrôle au moins les données d'image grâce auxquelles ladite au moins une information relative à la sécurité peut être affichée dans la zone d'image relative à la sécurité et pour fournir le paramètre correspondant, l'unité de contrôle étant configurée pour effectuer une comparaison relative à la sécurité sur la base des données d'image fournies et du paramètre fourni, de telle sorte que les données d'image fournies et le paramètre fourni soient vérifiés quant à la cohérence de leur contenu; et
- **que** l'unité de contrôle est configurée
pour vérifier si les données d'image fournies comprennent une caractéristique de sécurité et pour surveiller une confirmation concernant l'affichage réussi de la caractéristique de sécurité par l'unité d'affichage de vue frontale de la cabine du conducteur;
**ou**
pour ajouter une caractéristique de sécurité aux données d'image et pour surveiller une confirmation concernant l'affichage réussi de la caractéristique de sécurité par l'unité d'affichage de vue frontale de la cabine du conducteur.

2. Dispositif d'affichage selon la revendication 1, **caractérisé en ce que** le dispositif d'affichage est configuré pour présenter une caractéristique de sécurité dans les données d'image fournies à l'unité d'affichage de vue frontale de la cabine du conducteur, dans lequel la caractéristique de sécurité provoque une imagerie prédéterminée par l'unité d'affichage de vue frontale de la cabine du conducteur, qui permet de vérifier si l'unité d'affichage de vue frontale de la cabine du conducteur fonctionne comme prévu;
dans lequel en particulier:
- l'unité de contrôle est ou peut être alimentée au moins avec des données d'image qui correspondent à la fonction de sécurité, et l'unité de contrôle est configurée pour vérifier ces données d'image afin d'assurer que la présentation de la caractéristique de sécurité est correcte, et/ou l'unité de vérification est configurée pour insérer la caractéristique de sécurité dans les données d'image et pour transmettre les données d'image ainsi modifiées à l'unité d'affichage de vue frontale de la cabine du conducteur; et/ou
- l'unité de contrôle est ou peut être fournie avec une confirmation concernant l'affichage réussi de la caractéristique de sécurité par l'unité d'affichage de vue frontale de la cabine du conducteur, et l'unité de contrôle est configurée pour surveiller une confirmation correspondante.

3. Dispositif d'affichage selon la revendication 1 ou 2, **caractérisé en ce que**
- l'unité de contrôle est configurée pour vérifier la présentation correcte de la caractéristique de sécurité par l'ordinateur d'affichage dans les données d'image; ou
- l'unité de contrôle est configurée pour insérer la caractéristique de sécurité, en particulier pour insérer la caractéristique de sécurité la caractéristique de sécurité en modifiant les données d'image générées par l'ordinateur d'affichage et en transmettant les données d'image ainsi modifiées à l'unité d'affichage de vue frontale de la cabine du conducteur.

4. Dispositif d'affichage selon la revendication 1, 2 ou 3, **caractérisé en ce que** l'unité de contrôle comprend une entrée de confirmation, en particulier une interface numérique, pour recevoir la confirmation concernant la présentation de la caractéristique de sécurité dans les données d'image.

5. Dispositif d'affichage selon la revendication 4, **caractérisé en ce que** l'unité de contrôle est configurée pour contrôler l'affichage visuel de la caractéristique de sécurité, ce contrôle comprenant la surveillance d'une entrée utilisateur par le conducteur comme confirmation de l'acquittement d'un affichage visuel réussi de la caractéristique de sécurité dans une fenêtre temporelle prédéterminée, dans lequel l'entrée de confirmation est de préférence connectée à un dispositif d'entrée actionnable par l'utilisateur.

6. **Système** de surveillance de la vigilance dans la cabine de conducteur d'un véhicule ferroviaire, comprenant un dispositif d'affichage selon la revendication 4 ou 5, **caractérisé en ce que**
- le système est configuré pour afficher, selon le principe de la demande, une ou la caractéristique de sécurité en tant que demande de vigilance au moyen de l'unité d'affichage de vue frontale de la cabine de conducteur;
- le système, en particulier l'unité de contrôle, est configuré pour surveiller la confirmation par le conducteur en réponse à un affichage visuel de la caractéristique de sécurité dans un intervalle de temps prédéfini, en particulier au moyen d'un dispositif d'entrée, en particulier un dispositif de veille automatique, connecté à l'entrée de confirmation de l'unité de contrôle, et
- le système, en particulier l'unité de contrôle, est configuré pour déclencher une réaction liée à la sécurité si aucune confirmation n'est reçue;
l'unité de contrôle étant de préférence équipée d'un dispositif de veille automatique conforme à la norme UIC 641 et/ou VDE 0119-207-5 pour le contrôle de vigilance, en particulier au moyen d'un bouton-poussoir ou d'une pédale du dispositif de veille automatique.

7. Dispositif d'affichage selon l'une quelconque des revendications 1 à 5,
**caractérisé en ce que**
- ledit au moins un composant de calcul met en œuvre une fonction de sécurité et lit au moins une partie des données d'image via une interface de données d'image;
- l'unité de contrôle se présente sous la forme d'un module matériel séparé, en particulier séparé de l'ordinateur d'affichage et de l'ordinateur de sécurité (EVC), dans lequel l'unité de contrôle est de préférence prévue du côté de l'entrée des données d'image de l'unité d'affichage de vue frontale de la cabine du conducteur; et/ou
- l'unité de contrôle est connectée à un ordinateur sécurisé de niveau supérieur (EVC) via un canal sécurisé, l'ordinateur sécurisé de niveau supérieur (EVC) transmettant les paramètres à afficher à l'unité de contrôle;
et/ou
- le dispositif d'affichage est un composant de l'interface conducteur-machine (DMI), en particulier une DMI compatible avec ETCS, qui comprend en outre un terminal multifonction avec au moins un dispositif d'affichage DMI et au moins un dispositif d'entrée pour les entrées de l'utilisateur, en particulier une touche tactile et/ou des touches programmables sur le dispositif d'affichage DMI, dans lequel le dispositif d'entrée, pour confirmer l'affichage de la caractéristique de sécurité liée à la sécurité dans l'image de vue frontale, est connecté à l'unité de contrôle et transmet les entrées à l'unité de contrôle.

8. Dispositif d'affichage selon l'une quelconque des revendications 1 à 5 ou 7,
**caractérisé en ce que**
un affichage tête haute (HUD) de type LCD, en particulier de type LCD-TFT, est prévu comme unité d'affichage de vue frontale de la cabine du conducteur, dans lequel l'unité d'affichage de vue frontale de la cabine du conducteur comprend un écran à cristaux liquides (LCD) pouvant être éclairé par le bas, en particulier un TFT-ICD, qui est commandé par l'ordinateur d'affichage, ainsi qu'une optique de projection pour générer une image de vue frontale, en particulier une optique de projection qui peut être réglée en termes de champ de vision, et/ou un combineur qui peut être réglé en termes de champ de vision;
dans lequel au moins un capteur optoélectronique est de préférence prévu sur une ou plusieurs cellules de pixels, de préférence dans une zone périphérique, de l'écran à cristaux liquides et est connecté à l'unité de contrôle, afin de surveiller l'écran LCD à l'aide du capteur optoélectronique.

9. Dispositif d'affichage selon l'une quelconque des revendications 1 à 5, 7 ou 8,
**caractérisé en ce que**
- l'unité de contrôle est configurée pour fournir des codes de contrôle calculés, en particulier des codes de contrôle calculés à partir de données d'image à l'aide du composant de calcul, et un paramètre correspondant qui a été fourni, à une comparaison liée à la sécurité, et/ou
- l'unité de contrôle comprend au moins un générateur de codes de contrôle, une mémoire de valeurs de référence et un outil de comparaison.

10. Dispositif d'affichage selon l'une quelconque des revendications 1 à 5 ou 7 à 9, **caractérisé en ce que** l'unité de contrôle présente une architecture à deux niveaux avec un premier composant de calcul qui est configuré pour obtenir des données d'image générées par ordinateur côté entrée et pour modifier au moins une partie des données d'image, qui sont destinées à être affichées dans une zone d'image prédéterminée, en fonction d'une caractéristique de sécurité, et également pour fournir des données d'image côté sortie pour un dispositif d'affichage, et avec un deuxième composant de calcul qui est configuré pour vérifier les données d'image fournies par le premier composant de calcul en calculant un code de vérification pour les données d'image qui sont destinées à être affichées dans la zone d'image prédéterminée;
dans lequel, de préférence, le premier composant de calcul est configuré pour insérer la caractéristique de sécurité en modifiant les données d'image reçues du côté entrée, et le deuxième composant de calcul est configuré pour vérifier cette modification des données d'image, en particulier au moyen d'une comparaison de codes de vérification.

11. **Procédé** pour afficher de manière sécurisée des informations au moyen d'un dispositif affichage de vue frontale (20) dans la cabine du conducteur d'un véhicule ferroviaire,
comprenant:
- la génération d'une image de vue frontale au moyen d'une unité d'affichage de vue frontale dans la cabine du conducteur sur une surface d'affichage transparente dans le but d'afficher des informations dans un champ de vision à travers un pare-brise du véhicule ferroviaire (1),
dans lequel l'unité d'affichage de vue frontale de la cabine du conducteur est commandée par un ordinateur d'affichage (10) via une ligne de données d'image, lequel ordinateur d'affichage génère des données d'image au format pixel qui présentent au moins une information relative à la sécurité dans une zone d'image relative à la sécurité qui dépend d'un paramètre, de préférence un paramètre lié au trajet qui est transmis depuis un ordinateur de sécurité;
**caractérisé en ce**
- **qu'une** unité de contrôle (40) est connectée à la ligne de données d'image (11), laquelle unité de contrôle comprend un ou plusieurs composants de calcul et reçoit au moins une partie des données d'image provenant de l'ordinateur d'affichage, dans lequel l'unité de contrôle reçoit au moins des données d'image qui sont attribuées à la zone d'image liée à la sécurité et reçoit le paramètre correspondant, et l'unité de contrôle effectue une comparaison liée à la sécurité de l'exactitude du contenu sur la base des données d'image et des paramètres qui sont fournis; et
- **qu'**une caractéristique de sécurité prédéterminée est présentée dans les données d'image fournies à l'unité d'affichage de vue frontale de la cabine du conducteur, ce qui provoque une imagerie correspondante et liée à la sécurité par l'unité d'affichage de vue frontale de la cabine du conducteur afin de permettre à l'unité d'affichage de vue frontale de la cabine du conducteur d'être vérifiée pour la fonction prévue;
le procédé comprenant en outre les étapes suivantes:
- l'unité de contrôle insère la caractéristique de sécurité dans les données d'image et transmet les données d'image ainsi modifiées à l'unité d'affichage de vue frontale de la cabine du conducteur; ou
- la fourniture d'au moins les données d'image qui correspondent à la caractéristique de sécurité à l'unité de contrôle, l'unité de contrôle vérifiant ces données d'image pour une représentation précise de la caractéristique de sécurité;
- et l'unité de contrôle surveille une confirmation concernant l'affichage réussi de la caractéristique de sécurité par l'unité d'affichage de vue frontale de la cabine du conducteur.

12. Procédé selon la revendication 11, **caractérisé en ce que**
- la caractéristique de sécurité liée à la sécurité est affichée dans une zone visible de l'image de vue frontale d'une manière modifiable ou variable, en particulier variable dans le temps et/ou dans l'espace, comme prévu; et/ou
- l'ordinateur d'affichage présente au moins deux informations liées à la sécurité, une première information étant affichée dans une première zone d'image et une deuxième information étant affichée dans une deuxième zone d'image, et l'unité de contrôle effectue, à des fins de contrôle, une comparaison informatique des données d'image relatives à la première information dans la première zone d'image avec un premier paramètre correspondant et effectue une comparaison informatique des données d'image relatives à la deuxième information dans la deuxième zone d'image avec un deuxième paramètre correspondant, et l'unité de contrôle, lorsque le résultat du contrôle est négatif, masque, estompe et/ou marque comme incorrecte l'information incorrecte correspondante; la caractéristique de sécurité liée à la sécurité étant affichée visuellement, en particulier seulement occasionnellement, en plus ou en complément des au moins deux informations liées à la sécurité affichées en permanence.

13. Procédé selon l'une quelconque des revendications 11 ou 12 précédentes, **caractérisé en ce que**
ladite au moins une information liée à la sécurité représente dans l'image de vue frontale
- au moins des informations de trajet, en particulier une vitesse surveillée, des informations de freinage ou des informations de danger; et/ou
- au moins une information TCMS;
- au moins un signal ou symbole de voie virtuel pour la signalisation Cab; et/ou
- au moins un symbole ATP, en particulier un symbole de mode de fonctionnement ETCS.

14. Procédé selon l'une quelconque des revendications 11 à 13 précédentes, **caractérisé en ce que**
l'unité de contrôle déclenche une réaction liée à la sécurité si aucune confirmation n'est reçue et/ou si le résultat de la comparaison liée à la sécurité est négatif.

15. Interface conducteur-machine (2), en particulier interface conducteur-machine (2) compatible avec ETCS, pour une cabine du conducteur d'un véhicule ferroviaire (1), **caractérisée par** un dispositif d'affichage selon l'une quelconque des revendications 1 à 5 ou 7 à 10 précédentes.
